# EUROPEAN PATENT SPECIFICATION

(11) **EP 3 844 322 B1**
(45) Date of publication and mention of the grant of the patent: **02.10.2024**
(21) Application number: 19759402.1
(22) Date of filing: 30.08.2019
(51) Int. Cl.: C23F 11/12, C09D 5/08, C08K 5/11, C09D 7/63, C23C 22/60, C23C 22/62, C23C 22/66

(54) **METHOD OF TREATING A SURFACE WITH SURFACE TREATMENT COMPOSITIONS**
VERFAHREN ZUR OBERFLÄCHENBEHANDLUNG MIT OBERFLÄCHENBEHANDLUNGSZUSAMMENSETZUNGEN
PROCÉDÉ DE TRAITEMENT D'UNE SURFACE AVEC DE COMPOSITIONS DE TRAITEMENT DE SURFACE

(30) Priority: 31.08.2018 EP 18192047
(43) Date of publication of application: 07.07.2021
(73) Proprietor: Coöperatie Koninklijke Cosun U.A., 4814 NE Breda (NL)
(72) Inventor: LAZEROMS, Robert, 4814 NE Breda (NL); BOUWMAN, Jeroen, 4814 NE Breda (NL); VAN DEN BERG, Sam, 4814 NE Breda (NL)
(74) Representative: Nederlandsch Octrooibureau
(86) International application number: PCT/EP2019/073224
(87) International publication number: WO 2020/043884

(56) References cited:
- GB-A- 913 762
- US-A- 3 991 241
- US-A1- 2012 119 152
- US-A1- 2014 256 866

## Description

### Field of the Invention

The invention relates to surface treatment of metals or alloys as defined in the appended set of claims.

### Background of the Invention

Corrosion is the deterioration of materials, such as metals, by chemical interaction with their environment. Corrosion of metal objects occurs by electrochemical reactions at the metal surface involving the oxidation of the metal in the presence of water, electrolyte and oxygen. Metals, except for the so-called noble metals, are most stable as oxides (under typical ambient conditions). Corrosion has negative effects on the safe, reliable and efficient operation of equipment or structures, which are often more serious than the simple loss of a mass of metal. Mechanical failure, deterioration of appearance, contamination of fluids in vessels and pipes, loss of surface properties, et cetera, can be reasons for expensive replacement parts even though the amount of metal destroyed is quite small.

Since corrosion is an electrochemical process, the rate of corrosion reactions may be electrochemically controlled, for example by passing anodic or cathodic currents into the metal or by coating the metal with a metal low in the galvanic series (also called a sacrificial anode). This process is called cathodic protection and can only be applied if there is a suitable conducting medium such as earth or water through which a current can flow to the metal to be protected.

Corrosion may also be prevented by adding certain chemicals to a corrosive aqueous environment to change the corrosive potential thereof, e.g. by sequestration of metal ions. This may be an attractive solution in applications where the metal is in contact with water, e.g. in processing equipment, but there are at least as many application areas wherein it is not practical or not even possible to take such measures. This is typically the case if metal surfaces get regularly or constantly exposed to the atmosphere.

Known techniques to protect metals against corrosion in such cases mostly involve the creation of a protective layer at the metal surface. Corrosion inhibitors often function through several mechanisms (anodic inhibition, cathodic inhibition, barrier function through thin film formation et cetera) simultaneously.

Chemical conversion coatings are adherent, insoluble, inorganic crystalline or amorphous surface films, formed as an integral part of the metal surface by means of chemical reaction involving the metal (surface). In such coatings, a portion of the base metal is converted into one of the components of the resultant protective film, which is much less reactive to subsequent corrosion than the original metal surface (e.g. aluminum oxide on "anodised" aluminum). Historically, conversion coating has been performed using highly toxic compounds, most notably chromium (VI). Although these are being replaced by less harmful alternatives, such as zinc phosphate, chromium (III), Zirconium, permanganate, fluorotitanic acid, iridite, et cetera, the corrosion protection is much lower and some products require more complicated application techniques, such as application at elevated temperatures.

Techniques have also been developed wherein the protective barrier film is not formed by chemical reaction involving the metal, but, instead, by depositing a film or coating on top of the metal surface.

Certain organic corrosion inhibitors can be adsorbed onto a metal surface and self-assemble into protective layers that minimize access of corrosive agents to that surface. Adsorption can e.g. occur via physisorption and/or chemisorption. Known film-forming organic corrosion inhibitors include organic di- and tri-organic acids such as sebacic acid and adipic acid.

For adipic acid, formation of an ordered, robust monolayer is achieved when carbon steel is immersed in an aqueous solution containing 60 ppm of Cl⁻ and 50 ppm of adipic acid for 5 minutes, followed by rinsing in distilled water and heating in a hot air oven. The adipic acid monolayers can withstand rinsing with water and concentrated acid/base exposure. Additionally, these monolayers are stable over the course of at least one week. The formation of this kind of monolayer can be confirmed by AFM and FTIR studies. Polarization and EIS electrochemical analysis have shown that adipic acid monolayers adsorbed on metal surfaces reduce electrochemical activity on the surface, often the first step in corrosion.

It is an object of the present invention to provide new agents and treatments for corrosion protection that, compared to the known modalities, have improved performance, reduced environmental impact and/or reduced toxicity.

### Summary of the Invention

The present inventors have surprisingly discovered that surface treatment of a metal or alloy surface with a galactaric acid compound, e.g. with an aqueous solution of galactaric acid, galactarate salts, or combinations thereof, in sufficiently high concentration, results in the deposition of a corrosion-inhibiting film. Stated differently, the present inventors have surprisingly discovered that an aqueous treatment liquid comprising a sufficiently high concentration of galactaric acid, galactarate salts, or combinations thereof, applied onto a metal or alloy surface can be used for improving the corrosion resistance of or as flash rust inhibitor on the metal or alloy surface during drying of the aqueous treatment liquid to a film layer and after the aqueous treatment liquid is dried to a film layer. As will be illustrated in the experimental part of the present disclosure, the surface treatment is relatively simple and yields a lasting protective film.

The invention is defined by the appended set of claims. Accordingly, in an aspect of the invention, a surface treatment method is provided, said method comprising the consecutive steps of:
a) providing a substrate composed of a metal or alloy;
b) providing an aqueous treatment liquid comprising more than 1000 ppm and less than 25000 ppm of one or more galactarate salts;
c) contacting the substrate and the aqueous treatment liquid so as to allow the aqueous treatment liquid to cover at least part of the surface of the substrate; and
d) subjecting the surface of the substrate covered by the aqueous treatment liquid to a drying operation and recovering an article comprising said substrate and a film layer on the at least part of the substrate, wherein said film layer comprises one or more galactarate salts.

A further aspect of the disclosure, not part of the claims concerns the use of an aqueous treatment liquid comprising more than 1000 ppm of galactaric acid, galactarate salts, or combinations thereof, on at least part of the surface of a substrate composed of a metal or alloy for improving the corrosion resistance of or as flash rust inhibitor on the at least part of the surface of said substrate after being dried to a film layer and/or during drying to a film layer.

In preferred embodiments, the aqueous treatment liquid is an aqueous paint, aqueous varnish or aqueous lacquer.

The inventors have found that the galactaric acid, galactarate salts, or combinations thereof in the aqueous paint, the aqueous varnish or the aqueous lacquer act as a flash rust inhibitor on the metal surface during and after drying of the aqueous paint, aqueous varnish or aqueous lacquer to a film layer.

Accordingly, a further aspect of the disclosure, not part of the claims concerns the use of more than 1000 ppm of galactaric acid, galactarate salts, or combinations thereof in an aqueous paint, aqueous varnish or aqueous lacquer as a corrosion inhibitor or flash rust inhibitor on the surface of a substrate composed of a metal or alloy.

Yet another aspect of the disclosure, not part of the claims concerns the use of more than 1000 ppm of galactaric acid, galactarate salts, or combinations thereof in an aqueous paint, aqueous varnish or aqueous lacquer for promoting adhesion to the surface of a substrate composed of a metal or alloy.

The present inventors have further surprisingly found that said film layer can be used to improve the adhesion between the surface of a metal or alloy substrate and a further coating layer that is to be applied onto the surface of the metal or alloy substrate. Stated differently, said film layer can be advantageously used as a primer on the surface of a metal or alloy substrate for subsequent application of a further coating layer.

Accordingly, a still further aspect of the disclosure, not part of the claims concerns the use of an aqueous treatment liquid comprising more than 1000 ppm of galactaric acid, galactarate salts, or combinations thereof, applied on at least part of the surface of a substrate composed of a metal or alloy and being dried to a film layer, as a primer layer for a further coating layer.

A still further aspect of the disclosure, not part of the claims concerns the products obtainable by the surface treatment method as defined herein.

Galactaric acid provides the additional advantage that it can be obtained from renewable sources, as opposed to most of the organic film formers available to date, which are mostly derived from petrochemicals. In fact, galactaric acid can be sourced from side streams obtained in conventional sugar beet processing, which, to-date, are considered to be of relatively low or no value.

The use of galactaric acid in corrosion protection has been suggested in the art before.

US 2,529,177 describes the addition of 0.1-1000 ppm (0.00001-0.1 wt%), optimally 100 ppm (0.01 wt.%) of hydroxypolycarboxylates, including galactaric acid, to water which flows through metal pipes. It is stated that at higher concentrations, corrosion is actually assisted. US 2,529,177 teaches that the ferrous specimens subjected to said concentrations exhibited a dense dark iron compound coating which is smooth, resistant to penetration by liquids, and so firmly bonded to the metal that its removal by physical and chemical means is exceedingly difficult. Finally, it is explained that the film needs to be maintained by continuous addition of corrosion inhibitor to the water flowing through the pipe.

US 9,404,188B2 / US 2012/0119152A1 describe corrosion inhibitors based on the same principles as US 2,529,177. US 9,404,188 however teaches to use the mixtures of the hydroxycarboxylic acid salts with oxoacid anion salts. It is reiterated in US 9,404,188 that hydroxycarboxylic acids are effective in inhibiting metal corrosion when the metal is in contact with water. It is the purpose of US 9,404,188 to provide compositions having both this corrosion inhibition property as well as significantly improved metal sequestering properties. According to US 9,404,188 the hydroxyl groups of the hydroxycarboxylic acids are capable of forming esters when combined with suitable salts of oxoacid anions in water. These oxoacid anion esters of hydroxycarboxylic acids have been shown to form stable, water soluble complexes with metal ions such as calcium and magnesium, so that the sequestering ability is significantly improved.

US2012/119152A1 describes a corrosion inhibiting composition comprising a mixture of at least one salt of a hydrocarboxylic acid and at least one salt of a suitable oxoacid anion.

GB913762A describes protective coatings on metals by first providing the metal surface with a phosphate coating, and by then treating the surface with an aqueous treating solution comprising a stannous salt.

US3991241A discloses devices having a substrate surface which includes an Al-, Cr or Au evaporated film.

The methods described in these prior art documents rely on a different corrosion inhibition mechanism and, more importantly, do not result in the formation of a protective film at the metal surface. It is not recognized in nor derivable from these prior art documents that surface treatment of a metal surface with an aqueous solution of a galactaric acid compound, e.g. a galactarate salt, in sufficiently high concentration, results in the deposition of a highly effective corrosion-inhibiting film.

The present disclosure thus, for the first time, provides articles comprising a metal substrate and a galactarate based film layer deposited on the surface of the metal substrate, methods of treating metal substrate surfaces, compositions that can be used in such methods as well as the surface treated products obtainable using the present methods.

The invention is set out in the appended set of claims.

### Detailed description of the Invention

In a first aspect, the present disclosure, not part of the claims provides an article comprising a substrate and a film layer deposited or adsorbed on at least part of the surface of the substrate, wherein said substrate comprises a metal or an alloy, and wherein said film layer comprises a galactaric acid compound.

The term article, as used herein, refers to any substrate with a film layer as defined herein without imposing any limitations on size, shape, or function.

In embodiments, there is provided an article in accordance with the disclosure, wherein the article is a shaped, molded or rolled plate of the substrate material, wherein both surfaces of the plate have a film layer deposited thereon.

In embodiments, there is provided an article in accordance with the disclosure, wherein the film layer is deposited on at least 50% of the total surface of the substrate, preferably at least 60%, at least 70%, at least 80%, at least 90%, at least 99%. In embodiments the thin-film layer is deposited on the total surface of the substrate.

In embodiments, there is provided an article in accordance with the disclosure, wherein the film layer is deposited on at least 50% of the surface of the substrate which may be exposed to a corrosive environment during normal use of the article, preferably at least 60%, at least 70%, at least 80%, at least 90%, at least 99%. In embodiments the thin-film layer is deposited on the total surface of the substrate which may be exposed to a corrosive environment during normal use of the article.

In embodiments the substrate comprises a metal or alloy selected from the group consisting of iron, aluminum, copper, tin, zinc, nickel and alloys comprising one or more of said metals. In preferred embodiments, the substrate comprises an iron alloy comprising carbon, such as cast iron or steel. In preferred embodiments, the substrate comprises aluminum or aluminum alloys.

In embodiments the substrate consists of a metal or an alloy. In embodiments the substrate consists of a metal or an alloy selected from the group consisting of iron, aluminum, copper, tin, zinc, nickel and alloys comprising one or more of said metals. In preferred embodiments, the substrate consists of an iron alloy comprising carbon, such as cast iron or steel. In preferred embodiments, the substrate consists of aluminum or aluminum alloys.

In embodiments the substrate comprises an alloy comprising more than 70 wt.%, preferably more than 80 wt.%, more than 90 wt.%, more than 95 wt.% of a metal selected from the group consisting of iron, aluminum, copper, tin, zinc and nickel.

In embodiments the substrate consists of an alloy comprising more than 70 wt.%, preferably more than 80 wt.%, more than 90 wt.%, more than 95 wt.% of a metal selected from the group consisting of iron, aluminum, copper, tin, zinc and nickel.

In embodiments, the film layer deposited on at least part of the surface of the substrate has a thickness of less than 10 µm, preferably less than 5 µm, less than 1 µm, less than 100 nm, less than 50 nm, less than 30 nm, less than 20 nm, as measured by x-ray photoelectron spectroscopy.

In embodiments, the thin-film layer deposited on at least part of the surface of the substrate has a thickness of more than 0.5 nm, preferably more than 1 nm, more than 2 nm, more than 5 nm as measured by x-ray photoelectron spectroscopy.

In embodiments, the thin-film layer deposited on at least part of the surface of the substrate is not visible to the human eye.

In embodiments, the thin-film layer deposited on at least part of the surface of the substrate comprises more than 50 wt.% of the galactaric acid compound, preferably more than 75 wt.%, more than 85 wt.%, more than 90 wt.%, more than 95 wt.%, more than 99 wt.%. In embodiments, the thin-film layer deposited on at least part of the surface of the substrate consists of the galactaric acid compound.

Galactaric acid, commonly called mucic acid, is a polyhydroxy dicarboxylic acid obtainable from various natural sources, for example by oxidation of galactose or galacturonic acid. Galacturonic acid is a major component of pectin, which is found in plant cell wall material, while galactose is a major component of hemicellulose, thus allowing the galactaric acid precursors to be sourced from plant (e.g. food) processing waste streams.

Without wishing to be bound by any theory, the present inventors believe the galactaric acid compound may be comprised in the thin-film layer in the free acid form, the salt form or as a metal complex. Thus, in embodiments, the thin-film layer deposited on at least part of the surface of the substrate comprises a galactaric acid compound selected from the group consisting of
- galactaric acid, optionally in the form of a solvate,
- galactarate salts, optionally in the form of a solvate
- galactaric acid - metal coordination complexes, optionally in the form of a solvate
- galactarate - metal coordination complexes, optionally in the form of a solvate and combinations thereof.

In preferred embodiments, the thin-film layer deposited on the at least part of the surface of the substrate comprises a galactarate salt, optionally in the form of a solvate, selected from the group consisting of: ammonium galactarate, optionally in the form of a solvate; mono ethanolamine galactarate, optionally in the form of a solvate; di-ethanolamine galactarate, optionally in the form of a solvate; tri-ethanolamine galactarate, optionally in the form of a solvate; mono-isopropanolamine galactarate, optionally in the form of a solvate; sodium galactarate, optionally in the form of a solvate; potassium galactarate, optionally in the form of a solvate; and combinations thereof.

The terms 'mono ethanolamine galactarate', 'di-ethanolamine galactarate', 'tri-ethanolamine galactarate', and 'mono-isopropanolamine galactarate' are commonly used in the art. As is known by those skilled in the art, these terms correspond to respectively 'mono ethanolammonium galactarate', `di-ethanolammonium galactarate', `tri-ethanolammonium galactarate', and 'mono-isopropanolammonium galactarate'.

In more preferred embodiments the thin-film layer deposited on at least part of the surface of the substrate comprises a galactarate salt, optionally in the form of a solvate, selected from the group consisting of: sodium galactarate, optionally in the form of a salt; potassium galactarate, optionally in the form of salt; and combinations thereof. In highly preferred embodiments the thin-film layer deposited on at least part of the surface of the substrate comprises sodium galactarate, optionally in the form of a solvate.

In embodiments, the present disclosure, not part of the claims provides an article comprising a substrate and a film layer deposited on at least part of the surface of the substrate as defined herein before, wherein the article, upon exposure to a corrosive environment, may be characterized by an average percentage weight loss which is less than the average percentage weight loss of the corresponding substrate without the film layer, determined under identical test conditions. In preferred embodiments the article may be characterized by an average percentage weight loss which less than 80%, preferably less than 50%, preferably less than 20% of the average percentage weight loss of the corresponding substrate without the film layer, determined under identical test conditions.

In embodiments, the present disclosure, not part of the claims provides an article comprising a substrate and a film layer deposited on at least part of the surface of the substrate as defined herein before, wherein the article, upon exposure to a corrosive environment, may be characterized by a corrosion rate of less than 0.1 mm per year, preferably less than 0.05 mm per year, preferably less than 0.01 mm per year, preferably less than 0.005 mm per year, preferably less than 0.001 mm per year, preferably less than 0.0005 mm per year, preferably less than 0.0001 mm per year.

In embodiments, the present disclosure, not part of the claims provides an article comprising a substrate and a film layer deposited on at least part of the surface of the substrate as defined herein before, wherein the article is essentially free of visual signs of corrosion. In embodiments the article has a degree of rusting designated as Ri3, Ri2, Ri1 or Ri0 as determined by ISO 4628-3, preferably Ri2, Ri1 or Ri0, preferably Ri1 or Ri0, preferably Ri0.

In embodiments, the present disclosure, not part of the claims provides an article comprising a substrate and a film layer deposited on at least part of the surface of the substrate as defined herein before, wherein the article is characterized by a corrosion potential of more than -0.5 V at a current density of 0.00001 to 1 A/m², preferably of more than -0.4 V, more than -0.3 V, more than -0.2 V. In embodiments, the article is characterized by a corrosion potential which is more than 0 V at a current density of 0.00001 to 1 A/m².

In embodiments, the present disclosure, not part of the claims provides an article comprising a substrate and a film layer deposited on at least part of the surface of the substrate as defined herein before, wherein the article is characterized by a corrosion potential of less than 50% of the corrosion potential of the corresponding substrate without the film layer, determined under identical test conditions, preferably less than 40%, less than 30%.

The present inventors have also surprisingly found that the film layer deposited on at least part of the surface of the substrate provides excellent compatibility with subsequent coating layers, so that it can form a primer for various metals.

In embodiments, there is thus provided an article comprising a substrate and a film layer deposited on at least part of the surface of the substrate, as described herein earlier, wherein the article further comprises a coating layer deposited on at least part of the film layer.

In preferred embodiments, the coating layer comprises a paint, a varnish or a lacquer.

In embodiments, the coating layer is a thermoset or a thermoplastic coating, preferably a thermoset coating.

In embodiments the coating layer comprises an epoxy binder, a latex binder, an acrylic binder, a polyurethane binder, an alkyd binder, a vinyl binder, and/or a silicate binder.

In embodiments the coating layer comprises an additional corrosion inhibitor

In a second aspect of the present invention, there is provided a surface treatment method, comprising the consecutive steps of:
a) providing a substrate as defined herein before, wherein the substrate is composed of a metal or alloy;
b) providing an aqueous treatment liquid comprising more than 1000 ppm and less than 25000 ppm of one or more galactarate salts; and
c) contacting the substrate and the liquid so as to allow the treatment liquid to cover the substrate surface to be treated, and
d) subjecting the substrate surface covered by the treatment liquid to a drying operation and recovering an article comprising said substrate and a film layer on the at least part of the surface of the substrate, wherein said film layer comprises one or more galactarate salts.

In preferred embodiments, step c) comprises contacting the substrate and the liquid such that an article as defined herein before is formed.

In preferred embodiments, step d) comprises a drying operation which preserves the film formed in step c).

Accordingly, in an embodiment, there is provided a surface treatment method comprising the consecutive steps of:
a) providing a substrate composed of a metal or alloy;
b) providing an aqueous treatment liquid comprising more than 1000 ppm and less than 25000 ppm of one or more galactarate salts;
c) contacting the substrate and the aqueous treatment liquid so as to allow the aqueous treatment liquid to cover at least part of the surface of the substrate; and
d) subjecting the surface of the substrate covered by the aqueous treatment liquid to a drying operation and recovering an article comprising said substrate and a film layer on the at least part of the surface of the substrate, wherein said film layer comprises one or more galactarate salts.

In very preferred embodiments, the aqueous treatment liquid does not comprise galactaric acid.

The aqueous treatment liquid comprises more than 1000 ppm of one or more galactarate salts.

In very preferred embodiments, the aqueous treatment liquid does not comprise sodium chloride.

In preferred embodiments, step c) comprises contacting the substrate and the treatment liquid for more than 1 seconds, preferably more than 10 seconds, more than 30s, more than 60 seconds, more than 2 minutes, more than 3 minutes, more than 4 minutes or more than 5 minutes.

In embodiments, step c) comprises contacting the substrate and the treatment liquid for less than 120 minutes, preferably for less than 60 minutes, less than 50 minutes, less than 40 minutes, less than 30 minutes, less than 25 minutes or less than 20 minutes.

In embodiments, the surface treatment method of the present invention is provided, wherein step c) comprises spraying the aqueous treatment liquid onto the surface to be treated, *i.e*. at least part of the surface of the substrate, and/or immersing the surface to be treated, *i.e*. at least part of the surface of the substrate, in the aqueous treatment liquid. In embodiments step c) consists of spraying the aqueous treatment liquid onto the surface to be treated, *i.e*. at least part of the surface of the substrate. In other embodiments step c) consists of immersing the surface to be treated, *i.e*. at least part of the surface of the substrate, in the aqueous treatment liquid.

In embodiments, the surface treatment method of the present invention is provided wherein the aqueous treatment liquid comprises more than 1500 ppm of galactarate salts, preferably more than 2000 ppm, more than 4000 ppm, more than 7000 ppm, more than 8000 ppm.

In embodiments, the surface treatment method of the present invention is provided wherein the aqueous treatment liquid comprises less than 25000 ppm of galactarate salts, preferably less than 20000 ppm, less than 15000 ppm, less than 12000 ppm.

In highly preferred embodiments, the aqueous treatment liquid comprises 4000-25000 ppm of galactarate salts preferably 6000-20000 ppm, 7000-15000 ppm, 8000-12000 ppm, about 10000 ppm.

In embodiments, the film layer on the at least part of the surface of the substrate obtained in step d) comprises more than 50 wt.% of the galactarate salts preferably more than 75 wt.%, more than 85 wt.%, more than 90 wt.%, more than 95 wt.%, more than 99 wt.%.

In embodiments, the film layer on the at least part of the surface of the substrate obtained in step d) has a thickness of less than 10 µm, preferably less than 5 µm, less than 1 µm, less than 100 nm, less than 50 nm, less than 30 nm, less than 20 nm, as measured by x-ray photoelectron spectroscopy.

In preferred embodiments, the surface treatment method of the present invention is provided wherein the aqueous treatment liquid comprises a galactarate salt selected from the group consisting of: ammonium galactarate, mono ethanolamine galactarate, di-ethanolamine galactarate, tri-ethanolamine galactarate, mono-isopropanolamine galactarate, sodium galactarate, potassium galactarate, and combinations thereof. In more preferred embodiments the aqueous treatment liquid comprises a galactarate salt selected from the group consisting of: sodium galactarate, potassium galactarate, and combinations thereof. In very preferred embodiments the aqueous treatment liquid comprises sodium galactarate, potassium galactarate, ammonium galactarate or combinations thereof, even more preferably sodium galactarate or ammonium galactarate. In embodiments, the galactarate salt is provided in the form of a solvate, such as a hydrate.

It will be appreciated by the skilled person that reference is made to galactarate salts in existence at the time just before first contacted, blended, or mixed with water, upon which the salts may dissociate into ions or undergo a chemical reaction or other transformation, and coordinated solvents, such as water of crystallization, will dissolve. This is within the common sense and ordinary skills of an average chemist. Unless otherwise indicated herein, definitions of (relative) amounts of components concern the composition as prepared.

In embodiments, the surface treatment method of the present invention is provided, wherein the aqueous treatment liquid provided in step b) further comprises one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, preferably from the group consisting of corrosion inhibitors and chemical conversion coating agents.

In embodiments, the further additive is a corrosion inhibitor. In embodiments the further additive is a corrosion inhibitor selected from the group consisting of inorganic corrosion inhibitors and organic corrosion inhibitors, preferably organic corrosion inhibitors.

In embodiments the further additive is a corrosion inhibitor selected from the group consisting of anodic corrosion inhibitors, cathodic corrosion inhibitors or adsorbed film-forming corrosion inhibitors. In preferred embodiments the further additive is an adsorbed film-forming corrosion inhibitor. In preferred embodiments the adsorbed film-forming corrosion inhibitor is a surfactant.

In embodiments, the further additive is a corrosion inhibitor selected from the group consisting of alkanolamines, phosphate salts, ammonium salts, alkoxylated fatty amines, polymeric amines, and polyhydroxy acids.

In embodiments, the further additive is a chemical conversion coating agent. In embodiments, the further additive is a chemical conversion coating agent selected from the group of quaternary ammonium salts, phosphates, zirconium compounds, titanium compounds, fluorides, chromates, and oxalates, preferably zinc phosphate.

The present inventors have found that the methods provided herein are of particular use when the aqueous treatment liquid provided in step b) of the method is a metal working fluid, and thus the method is being applied in the context of metal working. Metalworking fluid is the name given to a range of liquids that are used to cool, lubricate and/or protect metal workpieces when they are being machined, ground, milled, et cetera. During these operations, the metal is reshaped and new surfaces are created and exposed not protected from corrosion. A metalworking fluid usually comprises corrosion inhibitors in order to prevent corrosion of the newly exposed surfaces. The present inventors found that the compositions and methods of the invention have particular utility for that purpose. Hence, embodiments are provided wherein the method as defined herein involves the working of the substrate, e.g. by cutting, grinding, milling, et cetera, and the treatment liquid provided in step b) is a metalworking fluid, resulting in the formation of a protective film onto the newly shaped surface, which thus remains protected during storage of the (semi-)finished part, even after the metalworking fluid is removed.

Hence, in a preferred embodiment of the invention, the aqueous treatment liquid provided in step b) of the method is a metal working fluid. In embodiments the aqueous treatment liquid further comprises an additive selected from the group consisting of oxidation inhibitors, extreme pressure additives, anti-mist agents, emulsifiers, boundary lubricants, viscosity index improvers, biocides, stabilizers, dispersants, defoamers, colourants, dyes, odourants and fragrances, preferably selected from the group consisting of emulsifiers, detergents, dispersants, oxidation inhibitors and boundary lubricants, preferably selected from the group consisting of emulsifiers, dispersants and detergents.

In embodiments the aqueous treatment liquid further comprises an additive selected from the group consisting of primary amides, ethylenediamine tetraacetic acid, fatty acid esters, and alkanolamine salts

In embodiments the aqueous treatment liquid further comprises a boundary lubricant selected from the group consisting of metal dialkyl dithiophosphates, metal diaryl dithiophosphates, alkyl phosphates, tricresyl phosphate, 2-alkyl-4-mercapto-1,3,4-thiadiazole, metal dialkyldithiocarbamates, metal dialkyl phosphorodithioates wherein the metal is typically zinc, molybdenum, tungsten or other metals, phosphorized fats and olefins, sulfurized fats and olefins and paraffins, fatty acids, carboxylic acids and their salts, esters of fatty acids, organic molybdenum compounds, molybdenum disulfide, graphite and borate dispersions.

In embodiments the aqueous treatment liquid further comprises an oxidation inhibitor selected from the group consisting of zinc and other metal dithiophosphates, hindered phenols, metal phenol sulfides, metal-free phenol sulfides, aromatic amines.

In embodiments the aqueous treatment liquid further comprises a dispersant selected from the group consisting of polyamine succinimdes, alkylene oxides, hydroxy benzyl polyamines, polyamine succinamides, polyhydroxy succinic esters and polyamine amide imidazolines.

In embodiments the aqueous treatment liquid further comprises a detergent selected from the group consisting of metal sulfonates, overbased metal sulfonates, metal phenate sulfides, overbased metal phenate sulfides, metal salicylates and metal thiophosphonates.

In embodiments the metal working fluid comprises less than 70 wt.%, preferably less than 60 wt.%, less than 40 wt.%, less than 20 wt.%, less than 10 wt.% mineral oils. In embodiments, the metal working fluid is free of mineral oils. As used herein, the terms "mineral oil" and "petroleum oil" are used interchangeably and refer to unrefined petroleum oils, refined petroleum oils and mixtures thereof.

In embodiments the metal working fluid comprises less than 85 wt.%, preferably less than 60 wt. %, less than 40 wt. %, less than 20 wt. %, less than 10 wt. % mineral, animal, marine, vegetable or synthetic oils. In embodiments, the metal working fluid is free of mineral, animal, marine, vegetable or synthetic oils.

In an embodiment of the invention, step c) comprises a metal working step which is performed while the substrate is in contact with the metal working fluid. In accordance with the invention the metal working step can comprise an operation selected from the group of casting, shaping, forming, cutting, milling, turning, threading, grinding, filling, welding, brazing, soldering, riveting, plating, sanding and polishing of the substrate.

In an embodiment, the aqueous treatment liquid provided in step b) of the method as defined herein is an aqueous paint, aqueous varnish or aqueous lacquer, wherein the aqueous treatment liquid provided in step b) further comprises one or more binders and further preferably one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, more preferably from the group consisting of corrosion inhibitors and chemical conversion coating agents.

In embodiments, the one or more binders in the aqueous treatment liquid being an aqueous paint, aqueous varnish or aqueous lacquer are chosen from the group consisting of epoxy binders, acrylic binders, polyurethane binders, alkyd binders, vinyl binders, and/or silicate binders.

The present inventors have surprisingly found that the film layer deposited on at least part of the surface of the substrate provides excellent compatibility with subsequent coating layers, so that it can form a primer for various metals or alloys.

Consequently, in a preferred embodiment, the surface treatment method as defined herein further comprises the step of:
e) depositing a coating layer onto at least part of the film layer provided in step d).

In preferred embodiments, the coating layer is a paint, a varnish or a lacquer. In embodiments, the coating layer is a thermoset or a thermoplastic coating, preferably a thermoset coating. In other embodiments the coating layer comprises an epoxy binder, a latex binder, an acrylic binder, a polyurethane binder, an alkyd binder, a vinyl binder, and/or a silicate binder.

In a further aspect, the present disclosure, not part of the claims provides the products obtainable by the surface treatment method described herein.

In a further aspect, the present disclosure, not part of the claims provides a surface treatment composition comprising i) water; ii) more than 1000 ppm of galactaric acid, galactarate salts, or combinations thereof; and iii) one or more further additives as defined herein earlier.

In embodiments, the surface treatment composition comprises more than 1500 ppm of galactaric acid, galactarate salts, or combinations thereof, preferably more than 2000 ppm, more than 4000 ppm, more than 7000 ppm, more than 8000 ppm.

In embodiments, the surface treatment composition comprises less than 25000 ppm of galactaric acid, galactarate salts, or combinations thereof, preferably less than 20000 ppm, less than 15000 ppm, less than 12000 ppm.

In highly preferred embodiments, the surface treatment composition comprises 4000-25000 ppm of galactaric acid, galactarate salts, or combinations thereof, preferably 6000-20000 ppm, 7000-15000 ppm, 8000-12000 ppm, about 10000 ppm.

In preferred embodiments, the surface treatment composition is a metalworking fluid.

In a further aspect the present disclosure, not part of the claims provides the use of a surface treatment composition as defined herein for improving the corrosion resistance of a substrate surface and/or for improving adhesion of paint.

In yet a further aspect, the present disclosure, not part of the claims provides the use of galactaric acid, galactarate salts, or combinations thereof to increase the corrosion inhibition efficiency of a further corrosion inhibitor.

A further aspect of the disclosure, not part of the claims concerns the use of an aqueous treatment liquid comprising more than 1000 ppm of galactaric acid, galactarate salts, or combinations thereof, on at least part of the surface of a substrate composed of a metal or alloy for improving the corrosion resistance of or as flash rust inhibitor on the at least part of the surface of said substrate after being dried to a film layer and/or during drying to a film layer.

Worded differently, an aspect of the disclosure, not part of the claims concerns the use of a film layer of a dried aqueous treatment liquid, said aqueous treatment liquid comprising more than 1000 ppm of galactaric acid, galactarate salts, or combinations thereof and being applied onto at least part of the surface of a substrate composed of a metal or alloy, for improving the corrosion resistance of or as flash rust inhibitor on the at least part of the surface of said substrate.

In these embodiments, the aqueous treatment liquid preferably further comprises one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, more preferably from the group consisting of corrosion inhibitors and chemical conversion coating agents.

In very preferred embodiments, the aqueous treatment liquid does not comprise galactaric acid.

In very preferred embodiments, the aqueous treatment liquid comprises more than 1000 ppm of one or more galactarate salts.

In very preferred embodiments, the aqueous treatment liquid does not comprise sodium chloride.

In preferred embodiments, the aqueous treatment liquid is an aqueous paint, aqueous varnish or aqueous lacquer. The inventors have found that the galactaric acid, galactarate salts, or combinations thereof in the aqueous paint, the aqueous varnish or the aqueous lacquer act as a flash rust inhibitor on the metal or alloy surface during and after drying of the aqueous paint, aqueous varnish or aqueous lacquer to a film layer.

Accordingly, a further aspect of the disclosure, not part of the claims concerns the use of more than 1000 ppm of galactaric acid, galactarate salts, or combinations thereof in an aqueous paint, aqueous varnish or aqueous lacquer as a corrosion inhibitor or flash rust inhibitor on the surface of a substrate composed of a metal or alloy.

Yet another aspect of the disclosure, not part of the claims concerns the use of more than 1000 ppm of galactaric acid, galactarate salts, or combinations thereof in an aqueous paint, aqueous varnish or aqueous lacquer for promoting adhesion to the surface of a substrate composed of a metal or alloy.

In preferred embodiments wherein the aqueous treatment liquid is an aqueous paint, aqueous varnish or aqueous lacquer, the aqueous treatment liquid further comprises one or more binders and preferably further one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, more preferably from the group consisting of corrosion inhibitors and chemical conversion coating agents.

The present inventors have further surprisingly found that said film layer can be used to improve the adhesion between the surface of a metal or alloy substrate and a further coating layer that is to be applied onto the surface of the metal or alloy substrate. Stated differently, said film layer can be advantageously used as a primer on the surface of a metal or alloy substrate for subsequent application of a further coating layer.

Accordingly, a still further aspect of the disclosure, not part of the claims concerns the use of an aqueous treatment liquid comprising more than 1000 ppm of galactaric acid, galactarate salts, or combinations thereof, applied on at least part of the surface of a substrate composed of a metal or alloy and being dried to a film layer, as a primer layer for a further coating layer. Worded differently, an aspect of the invention concerns the use of a film layer of a dried aqueous treatment liquid, said aqueous treatment liquid comprising more than 1000 ppm of galactaric acid, galactarate salts, or combinations thereof and being applied onto at least part of the surface of a substrate composed of a metal or alloy, as a primer layer for a further coating layer.

In these embodiments wherein a further coating layer is applied, the aqueous treatment liquid preferably further comprises one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, more preferably from the group consisting of corrosion inhibitors and chemical conversion coating agents.

In preferred embodiments, the film layer, further coating layer, aqueous treatment liquid, aqueous paint, aqueous varnish and aqueous lacquer are as defined herein before.

The disclosure, not part of the claims further concerns the following embodiments A - Q:
A) Article comprising or consisting of a substrate and a film layer deposited on at least part of the surface of the substrate, wherein said substrate is composed of a metal or alloy, and wherein said film layer comprises a galactaric acid compound, preferably a galactaric acid compound selected from the group consisting of galactaric acid, galactaric acid salts, galactaric acid complexes and combinations thereof.
B) The article according to embodiment A, wherein the substrate consists of a metal selected from the group consisting of iron, aluminum, copper, tin, zinc, nickel and alloys comprising one or more of said metals.
C) The article according to embodiment A or B, wherein the film layer comprises a galactarate salt, optionally in the form of a solvate, selected from the group consisting of: ammonium galactarate, optionally in the form of a solvate; mono ethanolamine galactarate, optionally in the form of a solvate; di-ethanolamine galactarate optionally in the form of a solvate; tri-ethanolamine galactarate, optionally in the form of a solvate; mono-isopropanolamine galactarate, optionally in the form of a solvate; sodium galactarate, optionally in the form of a solvate; potassium galactarate, optionally in the form of a solvate and combinations thereof.
D) The article according to any one of embodiments A - C, wherein the thin-film layer deposited on at least part of the surface of the substrate comprises more than 50 wt.% of the galactaric acid compound, preferably more than 75 wt.%, more than 85 wt.%, more than 90 wt.%, more than 95 wt.%, more than 99 wt.%.
E) The article according to any one of embodiments A - D, wherein the thin-film layer has a thickness of less than 10 µm, preferably less than 5 µm, less than 1 µm, less than 100 nm, less than 50 nm, less than 30 nm, less than 20 nm, as measured by x-ray photoelectron spectroscopy.
F) The article according to any one of embodiments A - E, wherein the article further comprises a coating layer deposited on at least part of the film layer, wherein the coating layer comprises a paint, a varnish or a lacquer.
G) The article according to any one of embodiments A - F, wherein the article is a shaped, molded or rolled plate of the substrate material, wherein both surfaces of the plate have a film layer deposited thereon.
H) Surface treatment method, comprising the consecutive steps of:
   a) providing a substrate composed of a metal or alloy;
   b) providing an aqueous treatment liquid comprising more than 1000 ppm of galactaric acid, galactarate salts, or combinations thereof; and
   c) contacting the substrate and the liquid so as to allow the treatment liquid to cover the substrate surface to be treated.
I) The surface treatment method according to embodiment H, further comprising the step of:
   d) subjecting the substrate surface covered by the treatment liquid to a drying operation.
J) The surface treatment method according to embodiment H or I, wherein step c) comprises spraying the treatment liquid onto the surface to be treated and/or immersing the surface to be treated in the liquid.
K) The surface treatment method according to any one of embodiments H to J, wherein the substrate consists of a metal selected from the group consisting of iron, aluminum, copper, tin, zinc, nickel and alloys comprising one or more of said metals.
L) The surface treatment method according to any one of embodiments H to K, wherein the aqueous treatment liquid comprises a galactarate salt selected from the group consisting of: ammonium galactarate, mono ethanolamine galactarate, di-ethanolamine galactarate, tri-ethanolamine galactarate, mono-isopropanolamine galactarate, sodium galactarate, potassium galactarate, and combinations thereof, preferably the sodium galactarate, potassium galactarate and combinations thereof, most preferably the sodium galactarate.
M) The surface treatment method according to any one of embodiments H to L, wherein the aqueous treatment liquid provided in step b) further comprises one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, preferably from the group consisting of corrosion inhibitors and chemical conversion coating agents.
N) Product obtainable by the surface treatment method as defined in any one of embodiments H-M.
O) A surface treatment composition comprising i) water; ii) more than 1000 ppm of galactaric acid, galactarate salts, or combinations thereof; and iii) one or more further additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, preferably from the group consisting of corrosion inhibitors and chemical conversion coating agents.
P) The surface treatment composition according to embodiment O, comprising a galactarate salt selected from the group consisting of: ammonium galactarate, mono ethanolamine galactarate, di-ethanolamine, tri-ethanolamine galactarate, mono-isopropanolamine galactarate, sodium galactarate, potassium galactarate, and combinations thereof, preferably the sodium galactarate, potassium galactarate and combinations thereof, most preferably the sodium galactarate.
Q) Use of a composition as defined in embodiment O or P for improving the corrosion resistance of a substrate surface and/or for improving adhesion of paint.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components. Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The invention will be further illustrated by means of the following examples, which are not intended to limit the scope of the invention in any way.

### Brief description of the drawings

The present invention will be discussed in more detail below, with reference to the attached drawings.
Figures 1a and 1b: Example 2 - Evolution of corrosion speed of carbon steel treated with sodium galactarate over time.
Figure 2: Example 2 - Inhibition efficiency of sodium galactarate on carbon steel as function of the concentration.
Figure 3: Example 2 - Tafel plot of cyclic polarization measurements of carbon steel treated with sodium galactarate.
Figure 4a and 4b: Example 3 - corrosion rate and polarization curve determined for waterline CI test solution (tested in duplicate).
Figure 5: Example 3 - corrosion rates determined for the irgacor, sebacic acid and galactaric acid test solutions (average of duplicate tests)
Figure 6a and 6b: Example 3 - polarization curves for the irgacor, sebacic acid, and galactaric acid test solutions relative to the reference electrode (6a) and normalized to the open circuit potential (6b).
Figures 7a, 7b and 7c: Example 4 - impedance spectrums (Bode and Nyquist plot) at 0.2% inhibitor.
Figures 8a, 8b and 8c: Example 4 - impedance spectrums (Bode and Nyquist plot) at 1% inhibitor.
Figure 9: Example 4 - linear polarization plot at 0.2% inhibitor.
Figure 10: Example 4 - linear polarization plot at 1% inhibitor.
Figure 11: Example 4 - polarization resistance as determined by EIS and LPR for the 1% inhibitor samples.
Figure 12 : Example 4 - Tafel plots at 0.2% inhibitor.
Figure 13: Example 4 - Tafel plots at 1% inhibitor.
Figure 14: Example 5 - XPS measurement results.
Figure 15: Example 5 - Fitted high resolution spectrum of the C1s signal.
Figure 16: Example 5 - Fitted high resolution spectrum of the O1s signal.
Figure 17: Example 6 - staining of aluminum coupons after 3 hours.

### Examples

*(comp.) indicates comparative examples.*

### Example 1

In order to test the corrosion inhibition properties of sodium galactarate and compare it to commercially available corrosion inhibitors, cold rolled steel was dipped for 1 minute in one of the test solutions shown in the below table, and air-dried. Next, the air-dried steel was submerged in 3.5 wt.% sodium chloride solution (prepared using demiwater) and regularly inspected for visual signs of rust. The results are summarized in the below table:

| **Dipping solution** | **Result** |
|---|---|
| Demineralized water (comp.) | Rust after 4 hours |
| Tap water (comp.) | Rust after 4 hours |
| 1 wt.% Sodium galactarate in demineralized water | No rust after 72 hours |
| 1 wt.% Halox X330 in demineralized water (comp.) | No rust after 72 hours |
| 1 wt.% Labema in demineralized water (comp.) | No rust after 72 hours |

### Example 2

The corrosion inhibition efficiency and the inhibition mechanism of sodium galactarate was studied. Carbon steel was exposed to 20, 100, 500 and 2000 ppm sodium galactarate in tap water. The corrosion inhibition was analyzed at regular intervals using Electrochemical Impedance Spectroscopy (EIS), Linear Polarization Resistance (LPR). When a constant corrosion speed was reached (max 5 days), a Cyclic polarization measurement was performed.

### Experimental setup

The tests were performed on low carbon steel plate (DC04, EN1.0338, St14). The steel was sanded up to grain #1200 sandpaper and the surface was rinsed with a detergent solution, demineralized water and ethanol. After ethanol rinsing, the surface was dried using a hot air stream. The exposure to the different test solutions was started within an hour after drying.

The electrochemical cell which was used consists of a glass recipient which was clamped to the surface of the steel plate by means of a rubber seal, which also defines the surface exposed (Ø 4 cm). The recipient was filled with 100 ml test solution wherein the reference (Ag/AgCl) electrode and counter electrode (Graphite) were submerged.

Test solutions of 20 ppm, 100 ppm, 500 ppm and 2000 ppm galactarate were prepared using sodium galactarate and tap water. The test solutions of 100 ppm and higher showed formation of precipitation.

The tap water used for the preparation of test solutions comprised the following ions:

| Medium | | Na⁺ | Mg²⁺ | K⁺ | Ca²⁺ | Cl⁻ | NO₃⁻ | SO₄²⁻ |
|---|---|---|---|---|---|---|---|---|
| Concentration | [ppm] | 15.9 | 11 | 3.8 | 97 | 24 | 9 | 37 |
| | [mM] | 0.7 | 0.5 | 0.1 | 2.4 | 0.7 | 0.1 | 0.4 |

Tap water without sodium galactarate was also tested as a reference.

### Electrochemical test parameters

The electrochemical test parameters are summarized in the below table. The open circuit potential was measured during ten minutes before each electrochemical measurement.

| Measurement | Parameter | Value | Reference potential |
|---|---|---|---|
| OCP | OCP | | Ag/AgCl |
| LPR | Eₛₜₐᵣₜ | -20 mV | OCP |
| | E_{final} | +20mV | OCP |
| | scanspeed | 0.1667 mV/s | |
| EIS | fₛₜₐᵣₜ | 1 kHz | |
| | f_{final} | 50 mHz | |
| | Eₐₚₚₗ | 0 V | OCP |
| | ΔE | 3.5 mV rms | OCP |
| Cyclic polarization | Eₛₜₐᵣₜ | -0.125 V | OCP |
| | Eₐₚₑₓ | +0.125 V | OCP |
| | E_{fin} | -0.125 V | OCP |
| | scanspeed | 0.5 mV/s | |

All the electrochemical tests were performed using a REF600 potentiostat and a ECM8 multiplexer, both by Gamry.

The ohmic voltage drop in the DC techniques (LPR and cyclic polarization) was corrected based on the solution resistance (EIS). From the corrected cyclic polarization measurement, the Stern-Geary coefficient, which is required to calculate corrosion speed based on polarisation resistance, was determined. The polarisation resistance as determined through EIS or LPR differed less than 5% on average.

### Results

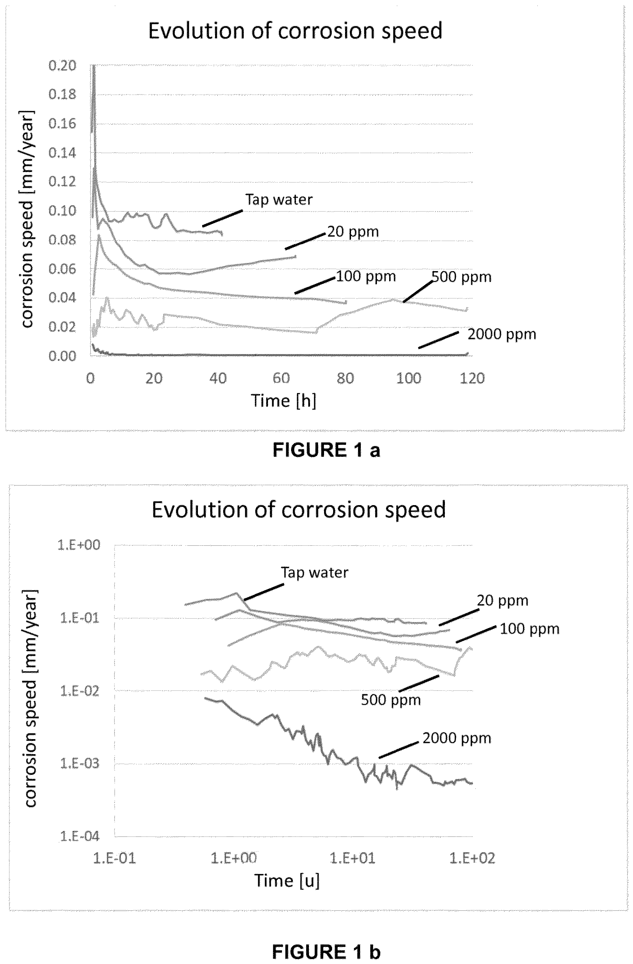

Figures 1a and 1b show the evolution of the corrosion behavior in time for different concentrations of sodium galactarate. Figure 1a shows excellent corrosion inhibition for 2000 ppm, where there is no corrosion in time, indicating barrier film formation. Figure 1b shows the corrosion behavior in time on a logarithmic scale. It can be seen that upon employing a 2000 ppm concentration of sodium galactarate, compared to a 500 ppm concentration, the corrosion inhibition increases more than 10 fold.

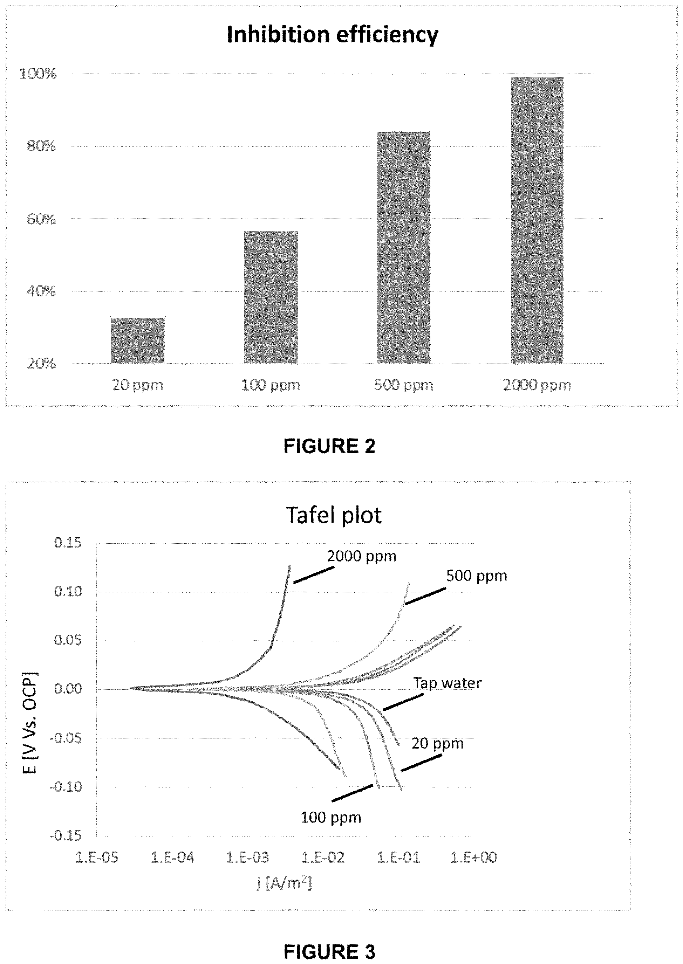

Figure 2 shows the corrosion inhibition efficiency as a function of the concentration. It can be seen that the 2000 ppm test solution has an inhibition efficiency of 99%.

The inhibition mechanism was analyzed using cyclic polarization measurements. Figure 3 is a Tafel plot wherein the measured potential was compensated by the open circuit potential. The measurement at 2000 ppm indicates passivation behavior.

Finally, the electrochemical impendance spectroscopy (EIS) measurements show that the capacitance decreases upon increasing galactarate concentrations, indicating the formation of a protective layer.

### Example 3

The corrosion inhibition efficiency of galactaric acid was studied and compared to the corrosion inhibition efficiency of known corrosion inhibitors waterline CI, irgacor and sebacic acid. Carbon steel was exposed to different test solutions and the corrosion inhibition was analyzed at regular intervals using Electrochemical Impedance Spectroscopy (EIS), Linear Polarization Resistance (LPR). After 96 hours, a Cyclic polarization measurement was performed.

### Experimental setup

The tests were performed on low carbon steel plate (DC04, EN1.0338, St14). The steel was sanded up to grain #1200 sandpaper and the surface was rinsed with a detergent solution, demineralized water and ethanol. After ethanol rinsing, the surface was dried using a hot air stream. The exposure to the different test solutions was started within an hour after drying.

The electrochemical cell which was used consists of a glass recipient which was clamped to the surface of the steel plate by means of a rubber seal, which also defines the surface exposed (Ø 4 cm). The recipient was filled with 80 ml test solution wherein the reference (Ag/AgCl) electrode and counter electrode (Graphite) were submerged. The test solutions were prepared in two stages. In the first stage stock solutions of the inhibitors in demineralized water were prepared. In the second stage the required weight of the concentrated solution was diluted in a particular solvent to obtain the final test solution. Detailed information regarding exact amounts used during the two stages of preparation of the solutions are listed the below table.

| Inhibitor | Delivered product | Stock solution (solvent: demineralized water) | | | Final test solution | | |
|---|---|---|---|---|---|---|---|
| | Concentration (wt. %) | Concentration (wt. %) | Prepared weight of the solution [g] | Added weight of the delivered product [g] | Concentrati on (wt. %) | Prepared weight of the solution [g] | amount inhibitor stock solution [g] |
| Waterline Cl (comp.) | 52.9% | 4.0% | 100 | 7.561 | 0.2% | 600 | 30.00 |
| Irgacor (comp.) | 65% | 2.6% | 100 | 4.000 | 0.1% | 600 | 23.08 |
| Sebacic acid (comp.) | 100% | 4.0% | 100 | 4.000 | 0.1% | 600 | 15.00 |
| Galactaric acid | 100% | 4.0% | 100 | 4.000 | 0.1% | 600 | 15.00 |

Waterline CI final test solution was prepared by diluting the required amount of inhibitor stock solution with tap water until a final weight of 600 g (waterline CI) or 200 g (sodium galactarate) is achieved.

Irgacor, sebasic acid and galactaric acid final test solutions were prepared by adding 120g hard water to the required amount of inhibitor stock solution and diluting the resulting solution with demineralized water until a final weight of 600g is achieved. Finally, the pH of the Irgacor, sebasic acid and galactaric acid solutions was adjusted to 9.5 using MEA (monoethanolamine).

Hard water was prepared by dissolving 1,72 g CaSO₄·2H₂O per liter demineralized water. The hardness of this water is 11.7 °dH (German hardness) which corresponds to 200 ppm of CaCOs. The tap water used for the preparation of waterline CI and sodium galactarate test solutions comprised the following ions:

| Medium | | Na⁺ | Mg²⁺ | K⁺ | Ca²⁺ | Cl⁻ | NO₃⁻ | SO₄²⁻ |
|---|---|---|---|---|---|---|---|---|
| Concentration | [ppm] | 15.9 | 11 | 3.8 | 97 | 24 | 9 | 37 |
| | [mM] | 0.7 | 0.5 | 0.1 | 2.4 | 0.7 | 0.1 | 0.4 |

The pH of the tap water was adjusted to 7.6 using a solution of Na₂CO₃.Tap water without a corrosion inhibitor was also tested as a reference test solution.

### Electrochemical test parameters

The electrochemical test parameters are summarized in the below table. The open circuit potential was measured during ten minutes before each electrochemical measurement.

| Measurement | Parameter | Value | Reference potential |
|---|---|---|---|
| OCP | OCP | | Ag/AgCl |
| LPR | Eₛₜₐᵣₜ | -20 mV | OCP |
| | E_{final} | +20mV | OCP |
| | scanspeed | 0.1667 mV/s | |
| EIS | fₛₜₐᵣₜ | 1 kHz | |
| | f_{final} | 50 mHz | |
| | Eₐₚₚₗ | 0 V | OCP |
| | ΔE | 3.5 mV rms | OCP |
| Cyclic polarization | Eₛₜₐᵣₜ | -0.125 V | OCP |
| | Eₐₚₑₓ | +0.125 V | OCP |
| | E_{fin} | -0.125 V | OCP |
| | scanspeed | 0.5 mV/s | |

All the electrochemical tests were performed using a REF600 potentiostat and a ECM8 multiplexer, both by Gamry. The ohmic voltage drop in the DC techniques (LPR and cyclic polarization) was corrected based on the solution resistance (EIS). From the corrected cyclic polarization measurement, the Stern-Geary coefficient, which is required to calculate corrosion speed based on polarisation resistance, was determined. The polarisation resistance as determined through EIS or LPR differed less than 5% on average.

### Results

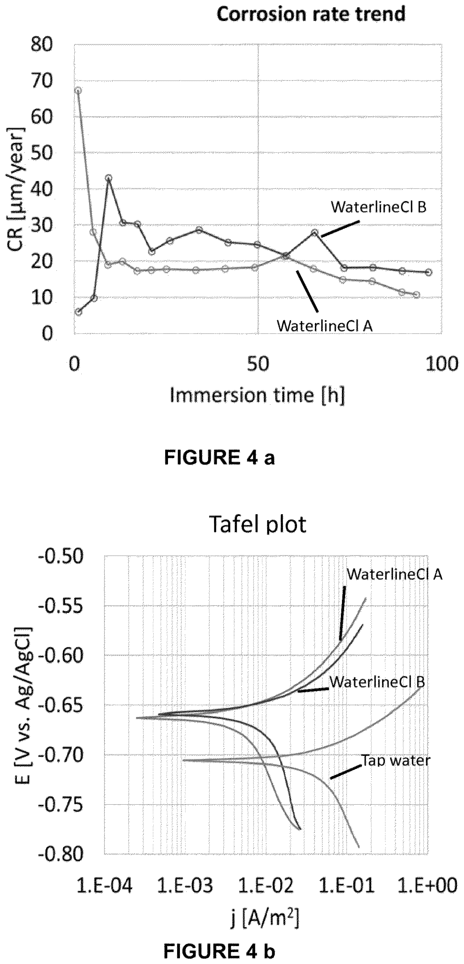

Figure 4a shows the corrosion rate determined for the waterline CI test solution (tested in duplicate). Figure 4b shows the polarization curves determined for the waterline CI test solution (tested in duplicate). The inhibition efficiency of the waterline CI test solution reached 82% when comparing to the corrosion rate of carbon steel in tap water measured after 40 hours of exposure.

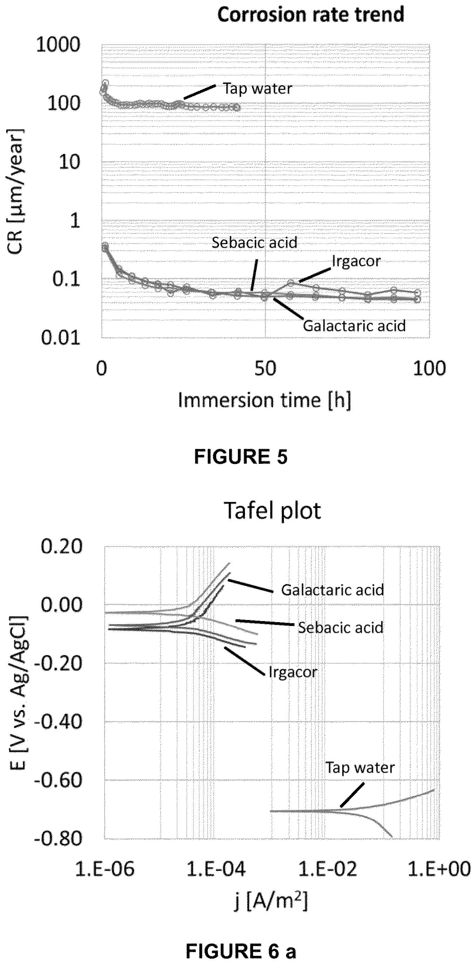

Figure 5 shows the corrosion rates determined for the irgacor, sebacic acid and galactaric acid test solutions (average of duplicate tests). Calculating the corrosion inhibition efficiency leads to the following results: 99.95% for galactaric acid, 99.94% for sebacic acid and 99.93% for ingacor. These experiments show that galactaric acid exhibits corrosion protection which is at least comparable to the corrosion protection afforded by commercial benchmarks.

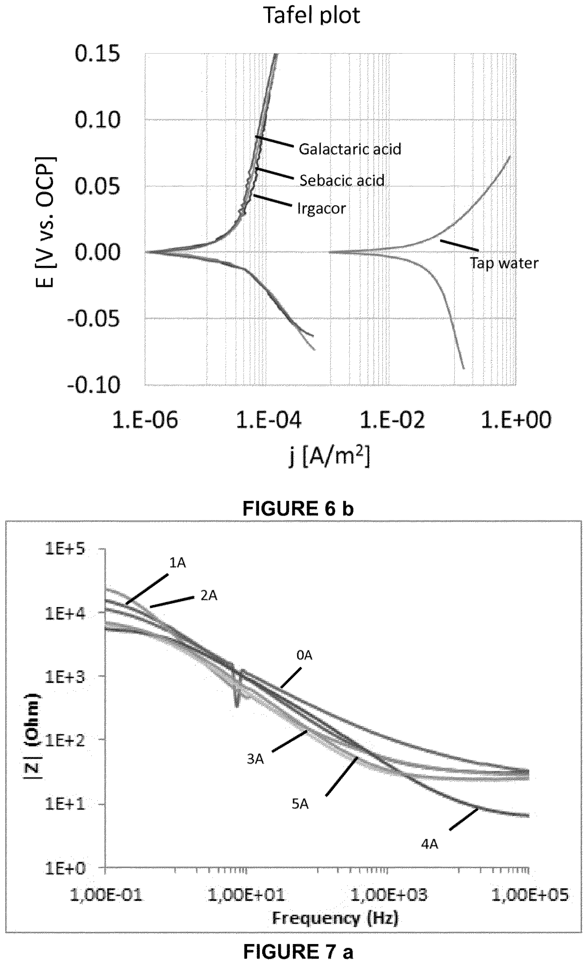

Figure 6a shows the polarization curves determined for the irgacor, sebacic acid, and galactaric acid test solutions relative to the reference electrode. Figure 6b shows the polarization curves determined for the irgacor, sebacic acid and the galactaric acid test solutions normalized to the open circuit potential.

Finally, the electrochemical impendance spectroscopy (EIS) measurements of the the irgacor, sebacic acid, and galactaric acid test solutions indicate the formation of a protective layer for all of these solutions.

### Example 4

The corrosion inhibition behavior of sodium galactarate was compared with another polyhydroxy carboxylic acid, glucaric acid, and 3 commercially available corrosion inhibitors, as summarized in the below table.

| | Product | Solid content |
|---|---|---|
| 1 (comp.) | Glucaric acid | 100% |
| 2 | NaMucic (Sodium galactarate) | 100% |
| 3 (comp.) | Halox Flash X-330 (Alkanolamine Borate and Phosphate Salts) | 68% |
| 4 (comp.) | Lameba AB Rust NFP (bis(2-hydroxyethyl)ammonium heptanoate) | 40% |
| 5 (comp.) | Waterline CI (Disodium glucarate rich s ugar di-acid mixture) | 50-55% |

The electrochemical analyses were performed with an electrochemical cell consisting of a working electrode (Steel DC04, non-alloy quality steel cold rolled) of 0.196 cm² immersed in natural sea water (with the corrosion inhibitor), a graphite counter electrode and a standard Ag/AgCl cell as a reference electrode. Nondestructive methods, Electrochemical impendance spectroscopy (EIS) and Linear polarization resistance (LPR); and destructive Dynamic Polarization were used at 1h of immersion. EIS measurements were carried out over a frequency range of 1 MHz to 0.1 Hz using a 10mV amplitude sinusoidal voltage at the open circuit potential. LPR measurements were carried out over a potential of ±15 mV in respect to the OCP at a scan rate of 0.125mV/s. Potentiodynamic polarization measurements were used to construct Tafel plots. A potential of ±150 mV in respect to the OCP was used at a scan rate of 0.167 mV/s.

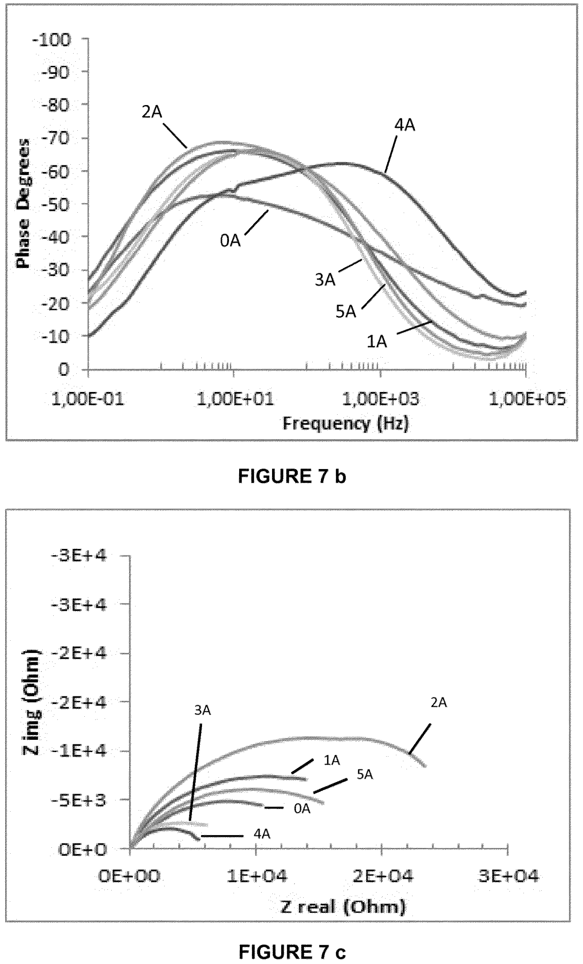

Figures 7a, 7b and 7c show the impedance spectrums (Bode and Nyquist plot) at 0.2% inhibitor. The parameters of the electrical circuit are shown in the below table.

| | **Sample** | **Rₑ (Ohm)** | **Rₚ (Ohm)** | **CPE** | **n** |
|---|---|---|---|---|---|
| 0A (comp.) | NaCl 2.8 g/100ml | 29.8 | 1.65E+04 | 5.48E-05 | 0.689 |
| 1A (comp.) | NaCl 2.8 g/100ml + 0.2% Glucaric Ac | 29.9 | 2.18E+04 | 4.90E-05 | 0.767 |
| 2A | NaCl 2.8 g/100ml + 0.2% NaMucic | 27.9 | 3.02E+04 | 2.51E-05 | 0.818 |
| 3A (comp.) | NaCl 2.8 g/100ml + 0.2% Flash X330 | 24.4 | 8.03E+03 | 6.14E-05 | 0.795 |
| 4A (comp.) | NaCl 2.8 g/100ml + 0.2% AB RUST NFP | 7.0 | 6.17E+03 | 4.71E-05 | 0.734 |
| 5A (comp.) | NaCl 2.8 g/100ml + 0.2% Waterline Cl | 24.5 | 7.95E+03 | 5.93E-05 | 0.787 |

| | | | | | |
|---|---|---|---|---|---|
| Rₑ=resistance of the electrolyte (NaCl brine), Rₚ=polarization resistance, CPE = constant phase element, n = degree of non-linearity | | | | | |

As can be seen from Figures 7a, 7b and 7c, polarization is slightly higher in the sodium galactarate sample and capacitance decreases.

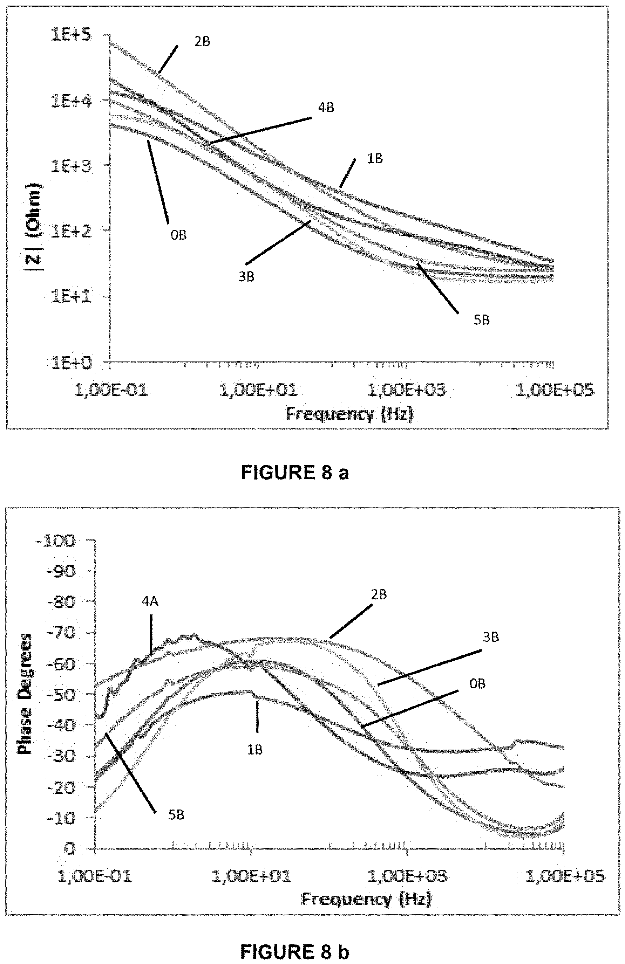

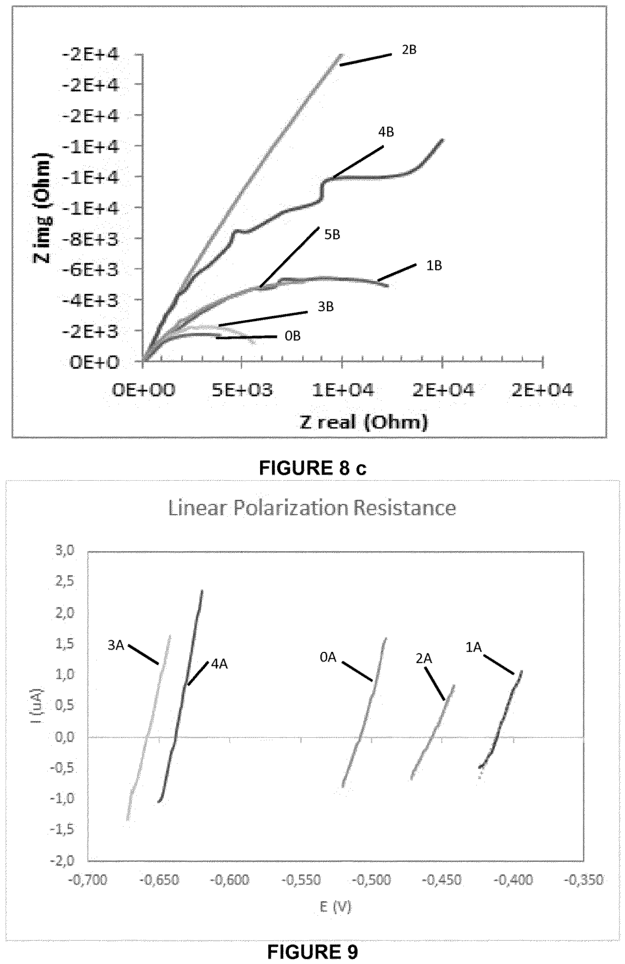

Figures 8a, 8b and 8c show the impedance spectrums (Bode and Nyquist plot) at 1% inhibitor. The parameters of the electrical circuit are shown in the below table.

| | **Sample** | **Rₑ (Ohm)** | **Rₚ (Ohm)** | **CPE** | **n** |
|---|---|---|---|---|---|
| 0B (comp.) | NaCl 3.5 g/100ml | 19.4 | 5.65E+03 | 1.41E-04 | 0.725 |
| 1B (comp.) | NaCl 3.5 g/100ml + 1% Glucaric Ac | 31.7 | 1.78E+04 | 4.38E-05 | 0.689 |
| 2B | NaCl 3.5 g/100ml + 1% NaMucic | 25.5 | 5.24E+05 | 9.80E-06 | 0.720 |
| 3B (comp.) | NaCl 3.5 g/100ml + 1% Flash X330 | 17.0 | 6.28E+03 | 5.89E-05 | 0.792 |
| 4B (comp.) | NaCl 3.5 g/100ml + 1% AB RUST NFP | 27.2 | 3.87E+04 | 5.21E-05 | 0.805 |
| 5B (comp.) | NaCl 3.5 g/100ml + 1% Waterline Cl | 24.0 | 1.63E+04 | 8.23E-05 | 0.718 |

| | | | | | |
|---|---|---|---|---|---|
| Rₑ=resistance of the electrolyte (NaCl brine), Rₚ=polarization resistance, CPE = constant phase element, n = degree of non-linearity | | | | | |

As can be seen from Figures 8a, 8b and 8c, the polarization resistance for sodium galactarate are much higher than for the other corrosion inhibitors, indicating much better inhibition performance. Figure 9 shows the linear polarization plot at 0.2% inhibitor. The corrosion potential E_{corr} and the polarization resistance Rₚ is shown in the below table. As can be seen from the figure, sodium galactarate has improved corrosion inhibition performance.

| | **Sample** | **Ecorr (V)** | **Rp (Ohm)** |
|---|---|---|---|
| 0A (comp.) | NaCl 2.8 g/100ml | -0.509 | 1.45E+04 |
| 1A (comp.) | NaCl 2.8 g/100ml + 0.2% Glucaric Ac | -0.412 | 1.61E+04 |
| 2A | NaCl 2.8 g/100ml + 0.2% NaMucic | -0.458 | 2.16E+04 |
| 3A (comp.) | NaCl 2.8 g/100ml + 0.2% Flash X330 | -0.658 | 1.04E+04 |
| 4A (comp.) | NaCl 2.8 g/100ml + 0.2% AB RUST NFP | -0.639 | 8.96E+03 |
| 5A (comp.) | NaCl 2.8 g/100ml + 0.2% Waterline Cl | -0.526 | 7.68E+03 |

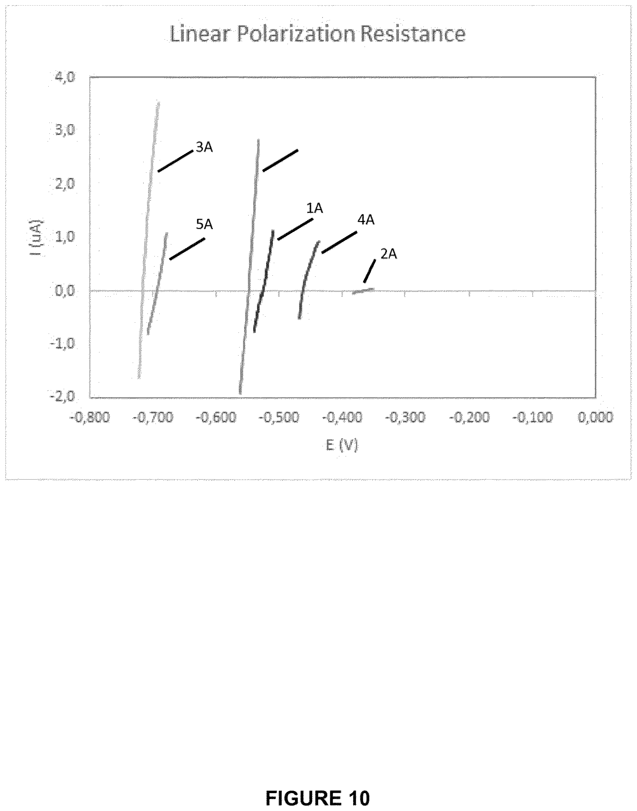

Figure 10 shows the linear polarization plot at 1% inhibitor. The corrosion potential E_{corr} and the polarization resistance Rₚ is shown in the below table.

| | **Sample** | **Ecorr (V)** | **Rp (Ohm)** |
|---|---|---|---|
| 0B (comp.) | NaCl 3.5 g/100ml | -0.5486 | 6.75E+03 |
| 1B (comp.) | NaCl 3.5 g/100ml + 1% Glucaric Ac | -0.5257 | 1.90E+04 |
| 2B | NaCl 3.5 g/100ml + 1% NaMucic | -0.3694 | 4.23E+05 |
| 3B (comp.) | NaCl 3.5 g/100ml + 1% Flash X330 | -0.715 | 4.60E+03 |
| 4B (comp.) | NaCl 3.5 g/100ml + 1% AB RUST NFP | -0.462 | 1.57E+04 |
| 5B (comp.) | NaCl 3.5 g/100ml + 1% Waterline Cl | -0.693 | 1.63E+04 |

A clear difference can be seen in the slopes and consequently the polarization resistance of the samples, with sodium galactarate presenting superior (tenfold) increased corrosion resistance.

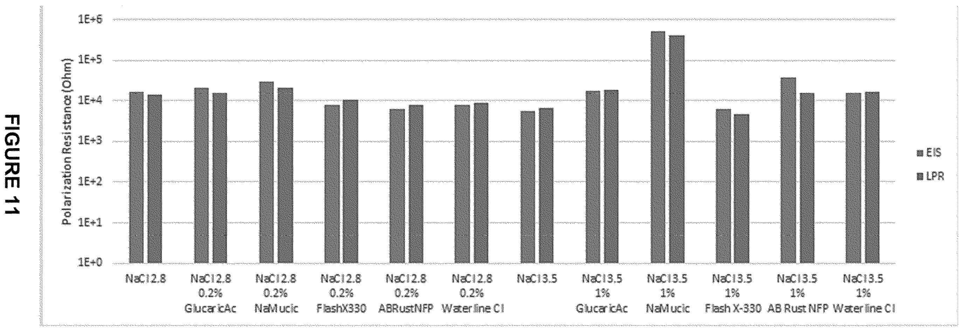

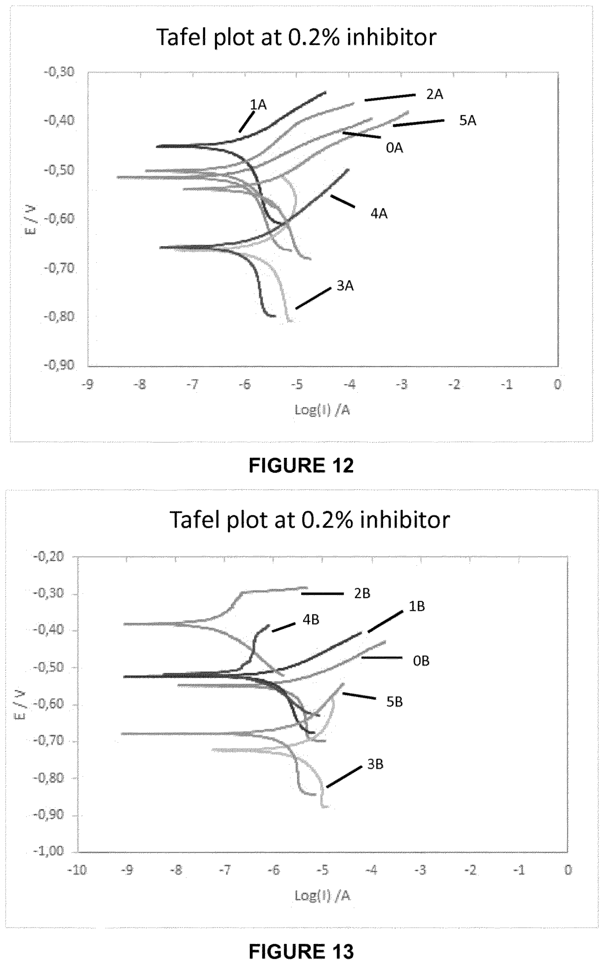

Figure 11 shows the polarization resistance as determined by EIS and LPR for the 1% inhibitor samples and shows the superior performance of sodium galactarate. Figure 12 shows Tafel plots at 0.2% inhibitor. Calculations from the corrosion intensity I_{corr} and the polarization resistance Rₚ and Tafel slopes βa and βc give the corrosion rate (CR) and inhibition efficacy (IE) listed in the below table including reference value. Even at 0.2% concentrations, Tafel plot data shows a reduced corrosion rate for samples containing sodium galactarate.

| | **Sample** | **E_{corr} (V)** | **I_{cor} (A/cm2)** | **Rₚ (Ohm)** | **βa (V/dc)** | **βc (V/dc)** | **CR (mm/y)** | **IE (%)** |
|---|---|---|---|---|---|---|---|---|
| 0A (comp.) | NaCl 2.8 g/100ml Ref | -0.499 | 5.82E-06 | 1.57E+04 | 0.048 | 0.297 | 0.0676 | -- |
| 1A (comp.) | NaCl 2.8 g/100ml +0.2% GlucaricAc | -0.441 | 5.46E-06 | 2.40E+04 | 0.070 | 0.375 | 0.0634 | 6.20 |
| 2A | NaCl 2.8 g/100ml + 0.2% NaMucic | -0.508 | 3.66E-06 | 2.84E+04 | 0.090 | 0.098 | 0.0425 | 37.12 |
| 3A (comp.) | NaCl 2.8 g/100ml +0.2% Flash X330 | -0.706 | 2.04E-05 | 2.05E+04 | 0.390 | 0.364 | 0.237 | -250.4 |
| 4A (comp.) | NaCl 2.8 g/100ml +0.2% AB RUST NFP | - 0.6616 | 7.12E-06 | 2.31E+04 | 0.086 | 0.561 | 0.083 | -22.3 |
| 5A (comp.) | NaCl 2.8 g/100ml +0.2% Waterline Cl | - 0.5272 | 1.60E-05 | 7.66E+03 | 0.070 | 0.263 | 0.186 | -174.3 |

Figure 13 shows Tafel plots at 1% inhibitor. Calculations from the corrosion intensity I_{corr} and the polarization resistance Rₚ and Tafel slopes βa and βc give the corrosion rate (CR) and inhibition efficacy (IE) listed in the below table including reference value. At 1% concentration, Tafel plot data shows a strongly reduced corrosion rate for samples containing sodium galactarate.

| | **Sample** | **E_{corr} (V)** | **I_{cor} (A/cm2)** | **Rₚ (Ohm)** | **βa (V/dc)** | **βc (V/dc)** | **CR (mm/y)** | **IE (%)** |
|---|---|---|---|---|---|---|---|---|
| 08 (comp.) | NaCl 3.5 g/100ml Ref | -0.546 | 1.63E-05 | 8.14E+03 | 0.066 | 0.647 | 0.189 | - |
| 1B (comp.) | NaCl 3.5 g/100ml + 1% GlucaricAc | -0.520 | 6.50E-06 | 1.93E+04 | 0.069 | 0.323 | 0.075 | 60.1 |
| 2B | NaCl 3.5 g/100ml + 1% NaMucic | -0.377 | 3.85E-07 | 3.82E+05 | 0.163 | 0.112 | 0.004 | 97.6 |
| 3B (comp.) | NaCl 3.5 g/100ml + 1% Flash X330 | -0.756 | 2.77E-05 | 1.08E+04 | 0.3 | 0.245 | 0.322 | -70.0 |
| 4B (comp.) | NaCl 3.5 g/100ml + 1% AB RUST NFP | -0.497 | 1.69E-06 | 1.24E+05 | 0.657 | 0.11 | 0.020 | 89.6 |
| 5B (comp.) | NaCl 3.5 g/100ml + 1% Waterline Cl | -0.687 | 1.16E-05 | 2.10E+04 | 0.131 | 0.721 | 0.135 | 28.58 |

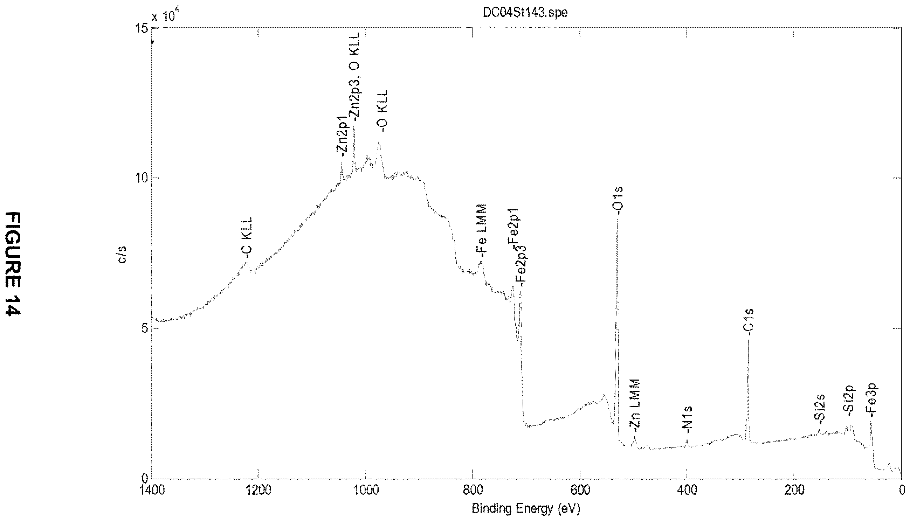

The corrosion inhibition indicated by the polarization resistance Rₚ as measured through the different electrochemical methods is summarized in Figure 14 (logarithmic scale) and show that sodium galactarate behaves superior to known corrosion inhibitors.

### Example 5

The formation of a protective sodium galactarate layer on carbon steel was analyzed by X-ray photoelectron spectroscopy (XPS).

XPS was performed with a PHI-5600ci using a monochromatic Al Kα source of radiation.

### Experimental setup

A low carbon steel plate (DC04, EN1.0338, St14) was prepared as follows. The steel was sanded up to grain #1200 sandpaper and then rinsed in demineralized water, dried in a stream of hot air and packed immediately in aluminum foil.

A 2000 ppm sodium galactarate solution was prepared in tap water.

The tap water comprised the following ions:

| Medium | | Na⁺ | Mg²⁺ | K⁺ | Ca²⁺ | Cl⁻ | NO₃⁻ | SO₄²⁻ |
|---|---|---|---|---|---|---|---|---|
| Concentration | [ppm] | 15.9 | 11 | 3.8 | 97 | 24 | 9 | 37 |
| | [mM] | 0.7 | 0.5 | 0.1 | 2.4 | 0.7 | 0.1 | 0.4 |

The pH of the tap water was adjusted to 7.6 using a solution of Na₂CO₃.

The cleaned carbon steel plates were exposed to the 2000 ppm sodium galactarate solution for 96 hours and then analysed using XPS and SEM.

### Results

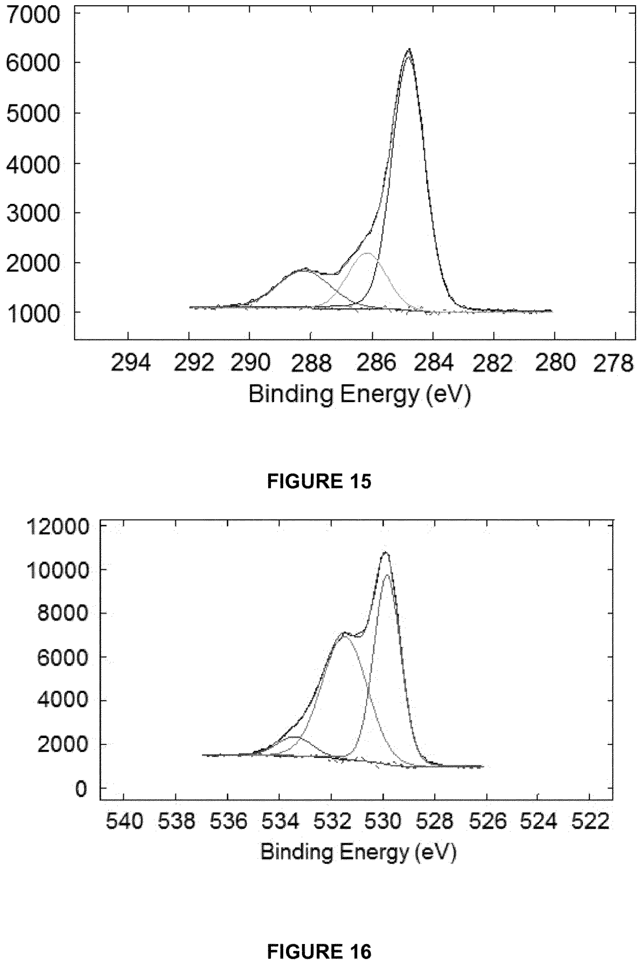

XPS analysis results are shown in Figures 14 - 16. Three main elements were found on the carbon steel surface after exposure to sodium galactarate, namely carbon, oxygen and iron. From the detailed analysis of the carbon signal it can be seen that all the carbon bonds detected on the surface are constituents of a galactaric acid molecule. A molecule of galactaric acid contains 5x C-C bonds, 4x C-O bonds and 2x O-C=O groups, which results in a relative ratio of 45% - 36% - 18%. The observed proportion between the bonds, namely 68% of the C-C bond, 16% of the C-O bond and 16% of the O-C=O group is not a perfect match but knowing that it is a semiquantitative analysis it proves that galactaric acid is present on the tested surface. The two other main elements are oxygen and iron. The analyses of the two elements are mutually consistent and show that iron and most of the oxygen are combined into Fe₂O₃ and FeOOH. These two compounds are products of carbon steel oxidation, where iron is maximally oxidized to Fe³⁺. The small amount of metallic iron detected on the surface indicates that the thickness of the protective layer is very low. The expected thickness is less than 10 nm (i.e. the approximate maximum interaction depth of the XPS test). The other elements detected on the surface, namely silicon, nitrogen and zinc make around 6% of the total amount of atoms found on the surface. Their compounds recognized after the high resolution scan can be easily present in tap water as contaminants. As silicon, nitrogen and zinc were detected in such a small amount, it is assumed that they are deposited in the surface layer accidentally and they do not take part in a formation of the protective layer. The fact that no sodium was reported proves that this element is not relevant is the buildup of the inhibition layer.

### Example 6

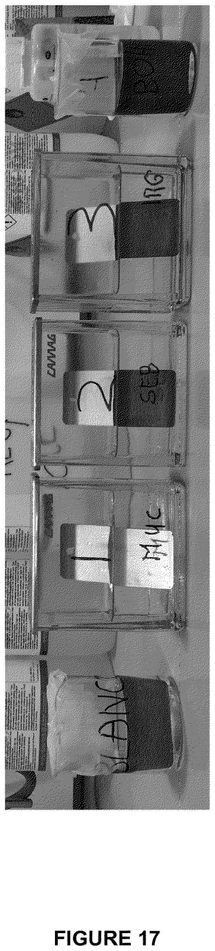

The corrosion inhibition properties of galactaric acid and in particular its effect on the staining of aluminum in alkaline media was tested and compared to commercially available corrosion inhibitors. Aluminum coupons were partially submerged in the test solutions shown in the below table. Before the aluminum coupon was submerged in the test solution, the pH was adjusted to 9.5 by addition of monoethanolamine and subsequently to pH 11 by addition of a 5% NaOH solution. The results in the below table were recorded after the coupons were submerged in the test solution for 3 hours and are also shown in Figure 17. After being submerged in the test solution for 3 days, the observation for galactaric acid was unchanged and still little to no staining or discolouration could be observed.

| | **Solution** | **Result - 3 h** |
|---|---|---|
| Blanco (comparative) | Demineralized water | Complete staining, very dark discolouration |
| 1 | 1000 ppm galactaric acid | Little to no staining or discolouration |
| 2 (comparative) | 1000 ppm sebacic acid | moderate staining, significant discolouration |
| 3 (comparative) | 1000 ppm Irgacorr | moderate staining, significant discolouration |
| 4 (comparative) | 1000 ppm boric acid | complete staining, very dark discolouration |

### Example 7

Adhesion tests were performed as follows. Several cold rolled metal substrates were surface treated with an aqueous treatment liquid. The metals used were:
a) steel (R46) size: 10.1 cm x 15.2 cm;
b) galvanized steel (S36) size: 19.5 cm x 5 cm; and
c) aluminum (S235JR, NF EN 10025-2, thickness 2 mm) size: 7.5 cm x 15.2 cm.

The surfaces of the metal substrates were first degreased with ethyl acetate to have an oil/fat free surface.

The surfaces of the metal substrates were subsequently treated with aqueous treatment liquids comprising either 3000 ppm or 5000 ppm of sodium galactarate and subsequently painted with water-based Castorama '*Murs et Plafonds interieurs*' matt paint for wall and ceiling substrates using the following procedure:
i) immersing the surface of the metal substrate during 16 hours in the aqueous treatment liquid;
ii) removing the metal substrate from the aqueous treatment liquid;
iii) drying at 23°C and 50% relative humidity for 24 hours; and
iv) painting the surface of the treated metal substrate using a doctor blade applicator (resulting in a 150 µ wet film thickness).

The adhesion of the paint to the surface of the metal substrate (with the film layer in between) was tested by crosscut and pull-off test with a standardized tape (following EN ISO 2409:1994) after 1 week and after 2 weeks drying time at room temperature. The crosscuts were made on the same substrate at the different times. Surfaces of the metal substrates that were not treated with the aqueous treatment were also painted with water-based Castorama '*Murs et Plafonds intérieurs*' paint. These painted substrates were also subjected to the above crosscut and pull-off test as a reference. The adhesion measured in accordance with EN ISO 2409:1994 is rated between Gt 0 (best) and Gt 5 (worst).

After drying the treated metal substrates, some "whitish" areas could be observed on the surfaces, but no rust. The "whitish" areas increase in line with the sodium galactarate concentration. After painting and drying of the paint, rust spots were shown on the reference metal substrates but not on the metal substrates treated with the sodium galactarate aqueous treatment liquids. Accordingly, sodium galactarate protects against flash rust. The results of the adhesion test are show in the following tables.

### Steel panels

| | 1 week | 2 weeks |
|---|---|---|
| ppm sodium galactarate | Gt value | Gt value |
| 0 (reference) (comp.) | 3 | 4 |
| 5000 | 2 | 2 |

### Galvanized steel panels

| | 1 week | 2 weeks |
|---|---|---|
| ppm sodium galactarate | Gt value | Gt value |
| 0 (reference) (comp.) | 5 | 5 |
| 3000 | 3 | 3 |
| 5000 | 3 | 4 |

### Aluminum panels

| | 1 week | 2 weeks |
|---|---|---|
| ppm sodium galactarate | Gt value | Gt value |
| 0 (reference) (comp.) | 3 | 4 |
| 5000 | 2 | 3 |

It was concluded that aqueous treatment liquids comprising more than 1000 ppm sodium galactarate can, after drying to a film layer, be used as a bio-based flash rust inhibitor. Moreover, the film layer improves adhesion of water-based paint to steel, aluminum and galvanized steel substrates.

## Claims

1. Surface treatment method, comprising the consecutive steps of:
a) providing a substrate composed of a metal or alloy, wherein the substrate preferably consists of a metal selected from the group consisting of iron, aluminum, copper, tin, zinc, nickel and alloys comprising one or more of said metals;
b) providing an aqueous treatment liquid comprising more than 1000 ppm and less than 25000 ppm of one or more galactarate salts, preferably more than 1000 ppm and less than 20000 ppm, less than 15000 ppm, less than 12000 ppm of one or more galactarate salts;
c) contacting the substrate and the aqueous treatment liquid so as to allow the aqueous treatment liquid to cover at least part of the surface of the substrate; and
d) subjecting the surface of the substrate covered by the aqueous treatment liquid to a drying operation and recovering an article comprising said substrate and a film layer on the at least part of the surface of the substrate, wherein said film layer comprises one or more galactarate salts.

2. The surface treatment method according to claim 1, wherein step c) comprises spraying the aqueous treatment liquid onto the at least part of the surface of the substrate and/or immersing the at least part of the surface of the substrate in the aqueous treatment liquid.

3. The surface treatment method according to claim 1 or 2, wherein the film layer on the at least part of the surface of the substrate comprises more than 50 wt.% of the one or more galactarate salts, preferably more than 75 wt.%, more than 85 wt.%, more than 90 wt.%, more than 95 wt.%, more than 99 wt.%.

4. The surface treatment method according to any one of claims 1 to 3, wherein the film layer on the at least part of the surface of the substrate has a thickness of less than 100 nm, less than 50 nm, less than 30 nm, less than 20 nm, as measured by x-ray photoelectron spectroscopy.

5. The surface treatment method according to any one of claims 1 to 4, wherein the aqueous treatment liquid comprises a galactarate salt selected from the group consisting of: ammonium galactarate, mono ethanolamine galactarate, di-ethanolamine galactarate, tri-ethanolamine galactarate, mono-isopropanolamine galactarate, sodium galactarate, potassium galactarate, and combinations thereof, preferably sodium galactarate, potassium galactarate, ammonium galactarate and combinations thereof, more preferably sodium galactarate or ammonium galactarate.

6. The surface treatment method according to any one of claims 1 to 5, wherein the aqueous treatment liquid comprises more than 1500 ppm of the one or more galactarate salts, preferably more than 2000 ppm, more than 4000 ppm, more than 7000 ppm, more than 8000 ppm.

7. The surface treatment method according to any one of claims 1 to 6, wherein the aqueous treatment liquid provided in step b) further comprises one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, more preferably from the group consisting of corrosion inhibitors and chemical conversion coating agents.

8. The surface treatment method according to any one of claims 1 to 7, further comprising the step of:
e) depositing a coating layer onto at least part of the film layer provided in step d).

9. The surface treatment method according to any one of claims 1 to 6, wherein the aqueous treatment liquid provided in step b) is an aqueous paint, aqueous varnish or aqueous lacquer.

10. The surface treatment method according to claim 9, wherein the aqueous treatment liquid provided in step b) further comprises one or more binders and preferably one or more additives selected from the group consisting of corrosion inhibitors, chemical conversion coating agents, oxidation inhibitors, extreme pressure additives, anti-mist agents, emulsifiers, boundary lubricants, viscosity index improvers, biocides, stabilizers, dispersants, detergents, defoamers, colourants, dyes, odourants and fragrances, preferably from the group consisting of corrosion inhibitors and chemical conversion coating agents.

## Patentansprüche

1. Verfahren zur Oberflächenbehandlung, das die folgenden aufeinanderfolgenden Schritte umfasst:
a) Bereitstellen eines Substrats, das aus einem Metall oder einer Legierung besteht, wobei das Substrat vorzugsweise aus einem Metall besteht, das aus der Gruppe ausgewählt ist, die aus Eisen, Aluminium, Kupfer, Zinn, Zink, Nickel und Legierungen besteht, die eines oder mehrere der besagten Metalle umfassen;
b) Bereitstellen einer wässrigen Behandlungsflüssigkeit, die mehr als 1000 ppm und weniger als 25000 ppm eines oder mehrerer Galactaratsalze umfasst, vorzugsweise mehr als 1000 ppm und weniger als 20000 ppm, weniger als 15000 ppm, weniger als 12000 ppm eines oder mehrerer Galactaratsalze;
c) In kontakt bringen des Substrats mit der wässrigen Behandlungsflüssigkeit, so dass die wässrige Behandlungsflüssigkeit zumindest einen Teil der Oberfläche des Substrats bedecken kann; und
d) Unterziehen der mit der wässrigen Behandlungsflüssigkeit bedeckten Oberfläche des Substrats einem Trocknungsvorgang und Gewinnen eines Artikels, der das besagte Substrat und eine Filmschicht auf zumindest einem Teil der Oberfläche des Substrats umfasst, wobei die besagte Filmschicht ein oder mehrere Galactaratsalze umfasst.

2. Verfahren zur Oberflächenbehandlung nach Anspruch 1, wobei Schritt c) das Aufsprühen der wässrigen Behandlungsflüssigkeit auf zumindest einen Teil der Oberfläche des Substrats und/oder das Eintauchen des zumindest einen Teils der Oberfläche des Substrats in die wässrige Behandlungsflüssigkeit umfasst.

3. Verfahren zur Oberflächenbehandlung nach Anspruch 1 oder 2, wobei die Filmschicht auf zumindest einem Teil der Oberfläche des Substrats mehr als 50 Gew.- % des einen oder der mehreren Galactaratsalze umfasst, vorzugsweise mehr als 75 Gew.-%, mehr als 85 Gew.-%, mehr als 90 Gew.-%, mehr als 95 Gew.-%, mehr als 99 Gew.-%.

4. Verfahren zur Oberflächenbehandlung nach einem der Ansprüche 1 bis 3, wobei die Filmschicht auf zumindest einem Teil der Oberfläche des Substrats eine Dicke von weniger als 100 nm, weniger als 50 nm, weniger als 30 nm, weniger als 20 nm aufweist, gemessen durch Röntgen-Photoelektronenspektroskopie.

5. Verfahren zur Oberflächenbehandlung nach einem der Ansprüche 1 bis 4, wobei die wässrige Behandlungsflüssigkeit ein Galactaratsalz umfasst, das aus der Gruppe ausgewählt ist, die aus Folgendem besteht: Ammoniumgalactarat, Monoethanolamingalactarat, Diethanolamingalactarat, Triethanolamingalactarat, Monoisopropanolamingalactarat, Natriumgalactarat, Kaliumgalactarat und Kombinationen davon, vorzugsweise Natriumgalactarat, Kaliumgalactarat, Ammoniumgalactarat und Kombinationen davon, besonders bevorzugt Natriumgalactarat oder Ammoniumgalactarat.

6. Verfahren zur Oberflächenbehandlung nach einem der Ansprüche 1 bis 5, wobei die wässrige Behandlungsflüssigkeit mehr als 1500 ppm des einen oder der mehreren Galactaratsalze umfasst, vorzugsweise mehr als 2000 ppm, mehr als 4000 ppm, mehr als 7000 ppm, mehr als 8000 ppm.

7. Verfahren zur Oberflächenbehandlung nach einem der Ansprüche 1 bis 6, wobei die in Schritt b) bereitgestellte wässrige Behandlungsflüssigkeit ferner ein oder mehrere Additive umfasst, die aus der Gruppe ausgewählt sind, die aus Folgendem besteht: Korrosionsinhibitoren, chemischen Konversionsbeschichtungsmitteln, Oxidationsinhibitoren, Hochdruckadditiven, Antibeschlagmitteln, Emulgatoren, Grenzschmiermitteln, Viskositätsindexverbesserern, Bioziden, Stabilisatoren, Dispergiermitteln, Reinigungsmitteln, Entschäumern, Färbemitteln, Farbstoffen, Geruchsstoffen und Duftstoffen, besonders bevorzugt aus der Gruppe, die aus Korrosionsinhibitoren und chemischen Konversionsbeschichtungsmitteln besteht.

8. Verfahren zur Oberflächenbehandlung nach einem der Ansprüche 1 bis 7, das ferner die folgenden Schritte umfasst:
e) Aufbringen einer Überzugsschicht auf zumindest einen Teil der in Schritt d) bereitgestellten Filmschicht.

9. Verfahren zur Oberflächenbehandlung nach einem der Ansprüche 1 bis 6, wobei die in Schritt b) bereitgestellte wässrige Behandlungsflüssigkeit eine wässrige Farbe, ein wässriger Firnis oder ein wässriger Lack ist.

10. Verfahren zur Oberflächenbehandlung nach Anspruch 9, wobei die in Schritt b) bereitgestellte wässrige Behandlungsflüssigkeit ferner ein oder mehrere Bindemittel und vorzugsweise ein oder mehrere Additive umfasst, die aus der Gruppe ausgewählt sind, die aus Folgendem besteht: Korrosionsinhibitoren, chemischen Konversionsbeschichtungsmitteln, Oxidationsinhibitoren, Hochdruckadditiven, Antibeschlagmitteln, Emulgatoren, Grenzschmiermitteln, Viskositätsindexverbesserern, Bioziden, Stabilisatoren, Dispergiermitteln, Reinigungsmitteln, Entschäumern, Färbemitteln, Farbstoffen, Geruchsstoffen und Duftstoffen, vorzugsweise aus der Gruppe, die aus Korrosionsinhibitoren und chemischen Konversionsbeschichtungsmitteln besteht.

## Revendications

1. Procédé de traitement de surface, comprenant les étapes consécutives de :
a) fournir un substrat composé d'un métal ou d'un alliage, où le substrat consiste de préférence en un métal sélectionné dans le groupe consistant en fer, aluminium, cuivre, étain, zinc, nickel et des alliages comprenant un ou plusieurs desdits métaux ;
b) fournir un liquide de traitement aqueux comprenant plus de 1 000 ppm et moins de 25 000 ppm d'un ou plusieurs sels de galactarate, de préférence plus de 1 000 ppm et moins de 20000 ppm, moins de 15 000 ppm, moins de 12 000 ppm d'un ou plusieurs sels de galactarate ;
c) mettre en contact le substrat et le liquide de traitement aqueux afin de permettre au liquide de traitement aqueux de couvrir au moins une partie de la surface du substrat ; et
d) soumettre la surface du substrat couverte par le liquide de traitement aqueux à une opération de séchage et récupérer un article comprenant ledit substrat et une couche de film sur l'au moins une partie de la surface du substrat, où ladite couche de film comprend un ou plusieurs sels de galactarate.

2. Procédé de traitement de surface selon la revendication 1, où l'étape c) comprend la pulvérisation du liquide de traitement aqueux sur l'au moins une partie de la surface du substrat et/ou l'immersion de l'au moins une partie de la surface du substrat dans le liquide de traitement aqueux.

3. Procédé de traitement de surface selon la revendication 1 ou 2, où la couche de film sur l'au moins une partie de la surface du substrat comprend plus de 50 % en poids de l'un ou plusieurs sels de galactarate, de préférence plus de 75 % en poids, plus de 85 % en poids, plus de 90 % en poids, plus de 95 % en poids, plus de 99 % en poids.

4. Procédé de traitement de surface selon l'une quelconque des revendications 1 à 3, où la couche de film sur l'au moins une partie de la surface du substrat a une épaisseur de moins de 100 nm, de moins de 50 nm, de moins de 30 nm, de moins de 20 nm, telle que mesurée par spectroscopie photoélectronique à rayons X.

5. Procédé de traitement de surface selon l'une quelconque des revendications 1 à 4, où le liquide de traitement aqueux comprend un sel de galactarate séléctionné dans le groupe consistant en : galactarate d'ammonium, galactarate de monoéthanolamine, galactarate de diéthanolamine, galactarate de triéthanolamine, galactarate de mono-isopropanolamine, galactarate de sodium, galactarate de potassium et leurs combinaisons, de préférence galactarate de sodium, galactarate de potassium, galactarate d'ammonium et leurs combinaisons, plus préférablement galactarate de sodium ou galactarate d'ammonium.

6. Procédé de traitement de surface selon l'une quelconque des revendications 1 à 5, où le liquide de traitement aqueux comprend plus de 1 500 ppm de l'un ou plusieurs sels de galactarate, de préférence plus de 2 000 ppm, plus de 4000 ppm, plus de 7 000 ppm, plus de 8 000 ppm.

7. Procédé de traitement de surface selon l'une quelconque des revendications 1 à 6, où le liquide de traitement aqueux fourni à l'étape b) comprend en outre un ou plusieurs additifs sélectionnés dans le groupe consistant en inhibiteurs de corrosion, agents de revêtement de conversion chimique, inhibiteurs d'oxydation, additifs extrême pression, agents antibuée, émulsifiants, lubrifiants limites, améliorants d'indice de viscosité, biocides, stabilisants, dispersants, détergents, antimousses, colorants, teintures, odorants et parfums, plus préférablement dans le groupe consistant en inhibiteurs de corrosion et en agents de revêtement de conversion chimique.

8. Procédé de traitement de surface selon l'une quelconque des revendications 1 à 7, comprenant en outre l'étape de :
e) déposer une couche de revêtement sur au moins une partie de la couche de film fournie à l'étape d).

9. Procédé de traitement de surface selon l'une quelconque des revendications 1 à 6, où le liquide de traitement aqueux fourni à l'étape b) est une peinture aqueuse, un vernis aqueux ou une laque aqueuse.

10. Procédé de traitement de surface selon la revendication 9, où le liquide de traitement aqueux fourni à l'étape b) comprend en outre un ou plusieurs liants et de préférence un ou plusieurs additifs sélectionnés dans le groupe consistant en inhibiteurs de corrosion, agents de revêtement de conversion chimique, inhibiteurs d'oxydation, additifs extrême pression, agents antibuée, émulsifiants, lubrifiants limites, améliorants d'indice de viscosité, biocides, stabilisants, dispersants, détergents, antimousses, colorants, teintures, odorants et parfums, de préférence dans le groupe consistant en inhibiteurs de corrosion et en agents de revêtement de conversion chimique.
